# EUROPEAN PATENT SPECIFICATION

(11) **EP 1 868 443 B1**
(45) Date of publication and mention of the grant of the patent: **10.11.2010**
(21) Application number: 06732951.6
(22) Date of filing: 16.03.2006
(51) Int. Cl.: A22C 21/00

(54) **PROCESSING OF CARCASS PARTS OF SLAUGHTERED POULTRY**
VERARBEITUNG VON KARKASSENTEILEN VON SCHLACHTGEFLÜGEL
TRAITEMENT DE CARCASSES DE VOLAILLES ABATTUES

(30) Priority: 17.03.2005 NL 1028561
(43) Date of publication of application: 26.12.2007
(73) Proprietor: Marel Stork Poultry Processing B.V., 5831 AV Boxmeer (NL)
(72) Inventor: VAN DEN NIEUWELAAR, Adrianus, Josephes, NL-5421 XG Gemert (NL); BOS, Jan, Willem, NL-5443 NL Haps (NL); ANNEMA, Hein, 5844 AM Stevensbeek (NL)
(74) Representative: Brookhuis, Hendrik Jan Arnold
(86) International application number: PCT/NL2006/000141
(87) International publication number: WO 2006/098619

(56) References cited:
- EP-A- 0 431 607
- EP-A- 0 784 932
- US-A- 3 629 903
- PATENT ABSTRACTS OF JAPAN vol. 1996, no. 04, 30 April 1996 (1996-04-30) & JP 07 313049 A (NIKKO:KK), 5 December 1995 (1995-12-05)

## Description

The invention relates to methods and devices for processing carcass parts of slaughtered poultry, a carcass part comprising at least part of a body and at least part of a wing. A wing naturally has an upper member and a lower member, between which is located the elbow joint with associated capsule. What is known as the humerus bone is located in the upper member, and the radius and ulna bones are located in the lower member.

Use is made of a conveyor device having at least one carrier and a conveyor path, the at least one carrier being displaceable in a conveying direction along the conveyor path and being designed to carry a carcass part. Use is also made of a wing processing station which is disposed along the conveyor path. The conveyor device is used to feed a carcass part to the wing processing station, and this carcass part is then processed in the wing processing station while the carcass part is being carried by the carrier.

There is an increased consumer demand for what are known as "tulips". "Tulips" are meat products derived from poultry, in particular from chicken, and are made from the upper member (the "upper arm") or from the lower member (the "lower arm") of the wing. The meat is turned up over part of the length of the bone, so as to obtain a type of "mini-club", in which the projecting bone part can be used as a handle to eat the tulip. To satisfy consumer demand, the processors of slaughtered poultry need methods and devices which allow efficient preparation of a tulip, which tulip is **characterized in that** one end of the bone is exposed.

The prior art has disclosed devices and methods for processing carcass parts of slaughtered poultry. In the standard known wing processing stations, as shown for example in EP 0 784 932, the wing is simply removed from the body. In known methods, the following steps are employed in succession: securing the carcass parts to carriers of a conveyor device, which conveyor device has a conveyor path, displacing the carriers in a conveying direction along the conveyor path and feeding the carcass parts in series to a wing processing station where the wings are removed from the body.

Furthermore, the prior art has disclosed methods and devices for making tulips from poultry wings. For example, US 3,629,903 has described a method and device with which tulips can be made from a cut-off wing with a cut-off lower member and a cut-off upper member.

It is an object of the invention to propose methods and devices which allow efficient production of tulips, preferably with a high quality.

This object is achieved by a device and a method according to the invention for processing carcass parts of slaughtered poultry, in which a carcass part comprises at least part of a body and at least part of a wing, comprising bone, capsule in the vicinity of the elbow joint and meat that is naturally present. It is preferable for the wing to comprise an upper member having the humerus bone, a lower member having the radius and ulna bones and an elbow. Use is made of a conveyor device having at least one carrier and a conveyor path, the at least one carrier being displaceable in a conveying direction along the conveyor path and being designed to carry a carcass part. Use is also made of a wing processing station disposed along the conveyor path. According to the method, the conveyor device is used to feed a carcass part to the wing processing station, and in the wing processing station the carcass part is processed while the carcass part is carried by the carrier. A kinematic reversal is also possible, in which case the wing processing station is conveyed past carcass parts. The poultry can, for example, be moved into the wing processing station with its back or breast facing forwards. The carriers can determine the orientation of the poultry, but it is also possible to use rotatable carriers which can be rotated in the desired direction. In the wing processing station, at least one bone belonging to an upper or lower member of the wing is uncovered over part of its length in the vicinity of the elbow, resulting in the preparation of a tulip while the upper member of the wing is still attached to the body. The tulip is **characterized in that** one end of a bone or of bones belonging to the upper or lower member is/are exposed over part of its/their length in the vicinity of the elbow, the capsule in the vicinity of the elbow joint preferably having been removed at the end of the bone. In a preferred embodiment, a tulip is prepared from the upper member of the wing to a sufficient extent for the end of the humerus bone to be exposed in the vicinity of the elbow joint without capsule and the meat to be turned up. In one embodiment, the lower member is in this case still attached via a residual skin and meat connection. In an alternative embodiment, the lower member has already been removed before the tulip is prepared from the upper member in the wing processing station. If the lower member has a problem in a carcass or carcass part, it is not necessary for the entire wing to be discarded.

It is possible for only the humerus bone to be exposed over part of its length in the vicinity of the elbow, while the upper member is still attached to the body. The lower member can then if appropriate also be processed further after its removal. It is also possible for only the radius and ulna bones to be exposed over part of their length in the vicinity of the elbow while the lower member is still attached to the upper member and the upper member is still attached to the body. It is also possible to prepare a tulip from both the upper and lower members while the members are still attached to one another and the upper member is still attached to the body. To prepare a tulip from the lower member, it is desirable for the wing tip with the capsule at that end to be removed from the lower member. This can take place either before the carcass part is fed to the wing processing station, or alternatively within the wing processing station. For the preparation of tulips from the upper member, it is likewise possible for the wing tip to be removed first of all. Therefore, if desired two tulips can be made from each wing. The tulip which is formed by the lower member can still be processed further. There are two small bones in the lower member (the radius bone and the ulna bone), whereas only one handle is required. The tulip can, for example, be cut into two pieces if there is sufficient meat. It is also possible, for example, for the thinner bone, the radius bone, to be pulled out.

In an automatic implementation of the wing processing station, no manual operations are required, with the result that the production rate can be high. Moreover, an automatic wing processing station is more favourable with regard to hygiene, and there is no longer any need for an operator who may possibly disrupt the process, and the automation is cost-minimized. The wing processing station may form part of a production line in which other parts of the carcass are also processed to form consumer products. By way of example, it is possible to subject the carcasses to a selection process, during which only some of the carcasses are fed to the wing processing station according to the invention, while others of the carcasses are fed to a different processing station where other processing operations are carried out. By way of example, the selection is made automatically with the aid of a camera or the like. If the lower member of a carcass or carcass part has a problem, there is then no need to discard the entire wing. It is also possible, for example, to make tulips only from carcasses above a certain minimum weight. The tulip then has a guaranteed quantity of meat.

One advantage of the invention is that the tulips are prepared while the wing is still attached to the body, so that the body can still be used for support and positioning. This is advantageous both when preparing tulips from the upper member and when preparing tulips from the lower member of the wing. Yet another advantage is that the wing processing station can be used instead of a traditional wing cutter in a slaughter line for poultry. This allows the range of products provided by a device which processes carcass parts of slaughtered poultry to be expanded without too much effort.

It is preferable for the exposing of a bone over part of its length in the vicinity of the elbow in the wing processing station to be automated. The turning-up of meat is effected, for example, by moving the upper and lower members with respect to one another or by pushing the bone through a die or past one or more scraper members, during which process the meat is turned up, so that the bone is exposed, for example with the aid of small scrapers, toothed wheels or rollers or the like.

In the wing processing station, it is advantageous for the wing to be spread away from the body in a spreading device. This greatly facilitates processing of the wing on account of the wing being made much more accessible. By way of example, the spreading is effected as a result of the wing of the bird being guided past first guides. Enabling these first guides to run outwards leads to a slight tensile force being exerted on the upper member, thereby compensating for variations in length in the wings; the elbow joint is always pulled onto the guide.

In the wing processing station, it is preferable for the skin between the lower and upper members to be placed under stress by the lower member being moved outwards with the aid of guide means. By way of example, the wing is held spread open by first guides at the upper member in the vicinity of the body, and the wing is kept under tension by second guides at the lower member of the wing.

In one possible embodiment, an incision is then made in the skin on the inside of the elbow. The inside of the elbow is the region of the elbow which is enclosed between the upper and lower members in the pivoting direction. The inside is therefore on the side of the acute angle included between the upper and lower members, while the outside of the elbow is located on the side of the obtuse angle. This incision on the inside of the elbow preferably does not reach the capsule in the vicinity of the elbow joint, or at least the capsule is not cut into to an excessive depth. The capsule is the cartilage and ligaments at the end of the bone. The purpose of this incision is to reduce the tension in the skin, so that the wing can be stretched more easily, which is advantageous for the remainder of the process. As a result of the reduced tension, the members of the wing can be moved apart more easily, with the result that the subsequent processing steps are much easier to carry out, in particular on account of the improved accessibility of the elbow and the lower and upper members. Another advantage is that in this way a position is determined for subsequently allowing the lower member to be cut off. The skin is cut into, for example, by a blade, for example a tiltable blade which is actuated by the wing itself.

In the wing processing station, it is preferable for one or more incisions to be made in the capsule in the vicinity of the elbow, in such a manner that the separation of the bones also causes the capsule in the vicinity of the elbow joint to come off at least one bone. Separation of the capsule of this type can be realized using a more or less sharp blade but also by the formation of "rectilinear damage", for example by moving the capsule along one edge or the like. The possibility exists of cutting into the capsule at the upper member in one "incision", so that this capsule can be separated and removed together with the upper member. It is also possible for the capsule at the lower member to be cut into in one "incision", so that the capsule remains connected to the upper member after the lower member has been separated from the upper member. It is also possible for both parts of the capsule to be cut into using two incisions next to one another, so that a tulip can be prepared from both members without a capsule at the end. It is preferable for this capsule to be removed from the end of the bone. This is because the capsule is slippery, making consumption more difficult. Therefore, one advantage of removing the capsule is that the "handle" of the tulip is "dry", for example after the tulip has been deep-fried.

An incision at the elbow is, for example, an incision made on the outside of the elbow all the way into the capsule without damaging the humerus, ulna and radius bones. If the bone is damaged, marrow can escape from the bone, which is undesirable for health reasons and also makes consumption more difficult. The incision only has to be a small one and is preferably made at a specific location: precisely on the capsule in the vicinity of the elbow joint and not too far onto the upper or lower member, since the bone of the member may then break instead of the members being separated. If the incision is made too close to the end of the member in the vicinity of the elbow, there is a risk that not all of the capsule will be detached from the bone. Making this incision at the optimum location means that the entire capsule in the vicinity of the elbow joint is detached from the bone when the members are then separated, after which the capsule can be removed. In the case of a statically positioned blade, the positioning of the blade for successively supplied wings can be reached by in each case pulling the elbow of each wing securely onto a stationary guide.

An incision in the vicinity of the elbow can be made, for example, using an elongate blade, preferably resiliently mounted. It is preferable for the blade to have a (rough) serration and to be approximately 10 cm long. The blade can to some extent be attached with a "wobbling" mount with the aid of hinges. It is also possible to make use of a rotating, serrated circular blade. To ensure that the blade does not damage the bone, the blade part is preferably mounted on a depth stop, for example a plastic disc or plate, which prevents the blade being able to penetrate too deep into the capsule.

In an alternative embodiment, the "incision" or rectilinear damage is made by an edge in the vicinity of the elbow. It is preferable to make use of a guide with a square cross section. This guide can be used for guiding and positioning the first member. As an alternative, it is possible to use any guide with an angular cross section having at least one edge. The damage which an edge of a guide of this type makes in the capsule has been found to be very reliable. The edge of the square guide damages the capsule sufficiently for it to be carried with the lower member during separation of the members while the bone of the upper member remains intact. The guide ensures positioning and cutting/damaging of the elbow joint all in one: the location where the guide engages for positioning the joint is also the ideal location to "cut" into the capsule. One advantage of this embodiment is that there is no need to use a blade which is susceptible to wear and that there is less risk of damage to the bone itself. Alternatively, the edge of the guide can also be designed as a cutting edge, with the result that a true "incision" is made but there is no need to use an additional blade.

In a preferred embodiment of the invention, in the wing processing station there are forcing means which, preferably after the capsule in the vicinity of the elbow joint has been cut into, separate the humerus bone from the radius and ulna bones. The forcing means break the elbow, the connection between the two ligaments of the wing, whereas the humerus, radius and ulna bones themselves remain intact and do not break. This has the advantage that the optional cutting-off of the lower member at a later stage can be carried out more easily: after all, there is no longer any need to cut through bone, but rather only skin, meat, etc. which is holding the broken wing together. After the elbow has been broken, the forcing means may preferably force at least one of the members, in such a manner that at least one bone belonging to a member of the wing is exposed over part of its length in the vicinity of the elbow, for example by sliding the lower and upper members with respect to one another, with the result that the meat comes off the bone and is turned up. By way of example, the forcing means press the end of the lower member towards the body in the vicinity of the elbow, so that at least the meat at that end of the humerus bone which is remote from the body comes off the bone and is turned up while the upper member is fixed to the body.

In a first preferred embodiment, the forcing means comprise guidance means past which the lower member of the wing can advance. If appropriate, the forcing means also comprise conveyor means, such as for example a belt or chain with pins or other conveyor projections to help the conveyor device for the slaughtered poultry to convey the wing. In a preferred embodiment, the conveyor means which assist the conveying of the wing during forcing of the lower member are pins which advance the upper member. There are no additional conveyor means which assist the conveying of the lower member. The wing is held spread open by first guides at the upper member in the vicinity of the body and the wing is held stretched by second guides at the lower member of the wing (i.e. not the wing tip). The second guides may, for example, be round or square in cross section. In a preferred embodiment, the guides, as soon as they have received the lower member of the wing, are moved towards one another by a, for example, pneumatic arm, so that the lower member of the wing is securely clamped in place. By way of example, this clamping takes place after a signal from a product detector. If the tension on the skin on the inside of the elbow is removed by an incision having been made therein, this step can be simplified. By way of example, the upper member is contacted by one of the pins and pushed onwards as a result, with the lower member remaining in place in the second guide. The second guide makes a pattern, with the lower member being forced forwards and downwards, in such a manner that the lower member moves counter to the pivoting direction of the elbow and the elbow breaks, whereas the humerus, radius and ulna bones themselves do not break. It is also possible to adapt the speed/timing of conveyor means which assist with the conveying of the wing during the forcing of the lower member to the speed of the conveyor device for the slaughtered poultry, for example the carriers. If the conveyor means of the wing move slightly more quickly than the conveyor device for the slaughtered poultry, the poultry can be at a standstill without stress on it at the moment at which the lower member is moved counter to the direction of flexion. This has the advantage that separation of the members becomes even more reliable and it is not only the wing which has to be rotated during this operation.

Depending on the incision made on the capsule in the vicinity of the elbow joint, the capsule, during the breaking operation, will remain attached to the lower member or to the upper member. As a result of one or more additional guides being arranged around the capsule in the vicinity of the elbow joint, the capsule can be held in place during the breaking operation, with the result that it is possible, if the capsule has been cut into at two locations, to keep the capsule off both the upper and lower members.

It is preferable for the pattern of the second guide which is followed by the lower member of the wing to be such that the end of the lower member is pressed towards the body in the vicinity of the elbow, so that at least the meat at that end of the humerus bone which is remote from the body comes off the bone and is turned up while the upper member is attached to the body. The two bones of the lower member, namely the radius and ulna bones, interact for the purpose of the meat being turned up. Then, the pattern of the second guide can be such that the lower member is moved towards the body as closely as possible past the upper member, in order in this way to turn up the meat on the lower member. It is in this way possible to prepare a tulip from both members.

In a second preferred embodiment, the forcing means comprise a rotating wheel with projections, for example non-aggressive teeth. These are, for example, projecting pins arranged radially on a wheel. The lower member is being carried along by the non-aggressive teeth at the moment at which the wing comes into contact with it. These pins assist the movement of the lower member when meat is being turned up but preferably do not assist with the separation of the members. There is preferably also a wheel positioned in front of the rotating wheel, which pushes the wing forwards and can stretch the wing. The wheel conveys the lower member downwards and forwards, with the result that the elbow is broken.

An alternative forcing means is a screw disposed horizontally along the path along which the wing moves, which screw forces the members in such a way that the elbow breaks.

As an alternative to turning up meat with the aid of the forcing means, after the members have been broken (for example using forcing means), the meat can be turned up by one or more scraper members, for example two scraper plates. As a result of the wing being received in a suitable manner, the start of a scraper plate can move between the end of the bone and the meat. The scraper plates then run in such a manner that the meat is turned up. The effect can be boosted by displacing the member to some extent with the aid of an additional guide or by a pattern in a guide for the lower member.

After the separation of the bones, it is preferable for the members to be completely separated from one another in a member separation device, preferably an automatic member separation device, which is disposed downstream of the wing processing station. If a tulip is prepared from only the lower member or only the upper member, the lower member can be separated from the upper member, for example by cutting. The lower member can then be discharged for further processing. In one embodiment, the last connection between the two members of the wing is cut through by hand. If a tulip is prepared from both the lower member and the upper member, it is preferable for the lower and upper members to be cut apart using two incisions, for example formed by a double rotating blade. The double incision is advantageous for removing the capsule in the vicinity of the elbow joint which has remained in place in the meat connection between the two members and which is undesirable. It is preferable for guides to ensure robust, clear positioning of the capsule in the vicinity of the elbow joint. This is in order to ensure that the capsule is always located between the two incisions and is therefore reliably removed. The loss of meat is minimal, since it is possible to cut close along the capsule.

In a preferred embodiment of the method according to the invention, the method is followed by removing the upper member from the body, for example in a known way, for example using a wing cutting device which is known per se. This results in a tulip being obtained from the upper member of the wing: an exposed end is created by means of the method according to the invention at the side of the humerus bone which was originally located in the vicinity of the elbow, while meat is located at the other end, which has now been cut off the body.

Without this additional method, the tulips of the upper members are still located on the carcass. This leads to the formation of a different product, namely a body with two tulip ends at the ends at which the wings were previously located. If the shoulder joint is also broken, it is then easy for the tulips to be removed from a cooked chicken.

If there are legs attached to the body of the slaughtered poultry, it is possible to use an embodiment of carriers in which the carcass part is suspended from a carrier by its legs. A method of this type for displacing poultry is known and attractive for various processing processes. This is advantageous in particular in a device in which only some of the carcasses are fed to the wing processing station, while the remainder of the carcasses undergo other processing operations.

Other product carriers are also possible, with only part of the carcass being carried. This offers the possibility of still making use of the good parts of the carcass even if another part of the carcass has been rejected. By way of example, part of the body is placed over a suitable carrier part, the carrier part being pivotable about one or more axes on the basis of suitable actuation. One advantage of a preferably conical carrier of this type is that it provides the possibility of positioning the carcass part prior to the wing processing. The positioning possibilities for a carrier which projects into the body offer more options than a carrier to which the legs of the bird are attached.

The devices and methods according to the invention will be explained in more detail below with reference to the appended drawing, which, without implying any restriction, shows exemplary embodiments.

In the drawing:
- Figs. 1a and 1b:: diagrammatically depict the skeleton structure of poultry,
- Fig. 2:: shows a first embodiment of a wing processing station according to the invention in its entirety,
- Figs. 3a, 3b and 3c:: show part of the wing processing station shown in Fig. 2 illustrating the way in which a carcass is supplied,
- Fig. 4:: shows part of the wing processing station shown in Fig. 2 provided with a guide in which a wing is clamped and spread away from the body,
- Figs. 5a, 5b, 5c:: show part of the wing processing station from Fig. 2 showing the way in which first cutting means operate,
- Figs. 6a, 6b, 6c, 6d:: show part of the wing processing station from Fig. 2 illustrating the way in which second cutting means operate,
- Fig. 7 and Fig. 8a, 8b, 8c, 8d:: show forcing means of the wing processing station from Fig. 2,
- Figs. 9a and 9b:: show part of the wing processing station from Fig. 2, illustrating a member separation device,
- Fig. 10:: shows a second embodiment of a wing processing station according to the invention in its entirety,
- Fig. 11:: shows part of the wing processing station from Fig. 10 illustrating the way in which a carcass is supplied,
- Fig. 12:: shows part of the wing processing station from Fig. 10 provided with a guide in which a wing is clamped and spread away
- Figs. 13a, 13b and 13c:: from the body, show part of the wing processing station from Fig. 10, illustrating the way in which first cutting means operate,
- Figs. 14a, 14b, 14c, 14d:: show part of the wing processing station from Fig. 10 illustrating the way in which second cutting means operate,
- Figs. 15a and 15b:: show forcing means of the wing processing station from Fig. 10,
- Figs. 16a and 16b:: show part of the wing processing station from Fig. 10, illustrating a member separation device,
- Fig. 17:: shows a third embodiment of a wing processing station according to the invention in its entirety,
- Figs. 18a and 18b:: show part of the wing processing station from Fig. 17, illustrating the way in which first cutting means operate,
- Figs. 18c and 18d:: show part of the wing processing station from Fig. 17, illustrating the way in which second cutting means operate,
- Figs. 19a, 19b and 19c:: show forcing means of the wing processing station from Fig. 17,
- Fig. 20:: shows part of the wing processing station from Fig. 17, illustrating a member separation device,
- Fig. 21:: shows a fourth embodiment of a wing processing station according to the invention,
- Figs. 22a and 22b:: show a fifth embodiment of a wing processing station according to the invention,
- Figs. 23a and 23b:: show an alternative view of the fifth embodiment of a wing processing station according to the invention,
- Figs. 24a - 24c:: show a sixth embodiment of a wing processing station according to the invention.

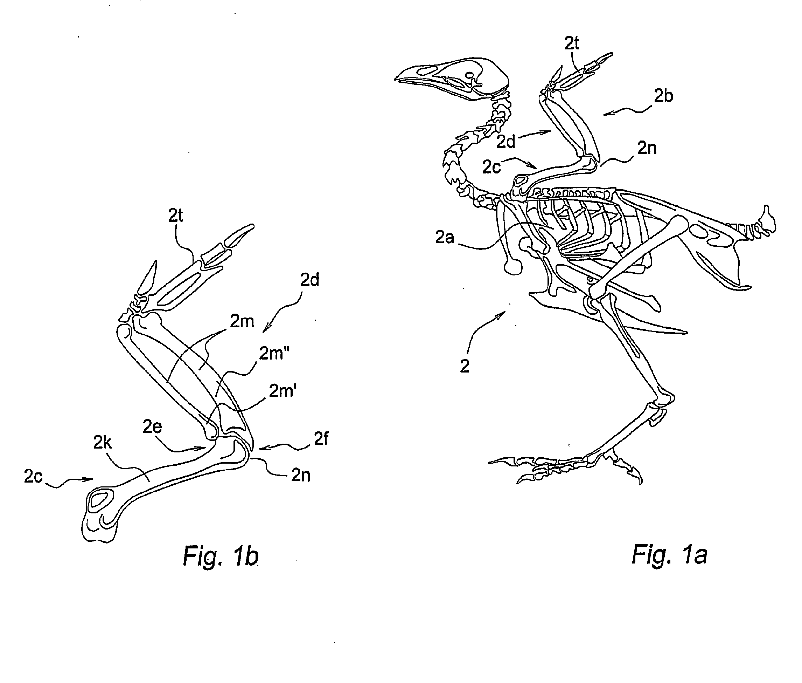

Figs. 1a and 1b diagrammatically depict the skeleton structure of poultry, in particular of a chicken. The invention relates to a method and a device for processing carcass parts of slaughtered poultry. A carcass part 2 of the poultry comprises, for processing in accordance with the invention, at least part of a body 2a and at least part of a wing 2b, comprising bone, capsule in the vicinity of the elbow joint and meat that is naturally present. The wing 2b, shown in Fig. 1 of the slaughtered poultry on the carcass 2 comprises an upper member 2c including the humerus bone 2k, a lower member 2d including the radius bone 2m' and the ulna bone 2m" (jointly denoted by 2m) and an elbow 2n. The elbow comprises an inside 2e and an outside 2f. The inside 2e of the elbow is the region of the elbow which is included between the upper and lower members (2c and 2d) in the pivoting direction. The inside 2e is therefore located on the side of the acute angle included by the upper and lower members (2c and 2d); the outside 2f of the elbow is located on the side of the obtuse angle. Capsule (not shown in Fig. 1) is located in the vicinity of the elbow at the ends of the bones. The meat which is naturally present around the bones is also not shown in Fig. 1. At the other end of the lower member, which is not fixed to the elbow, there is also a wing tip 2t which is fixed to the lower member by capsule (not shown). A tulip can be prepared from both the upper member 2c and the lower member 2d. To prepare a tulip from the lower member 2d, it is desirable for the wing tip 2t to be removed together with the capsule from the lower member.

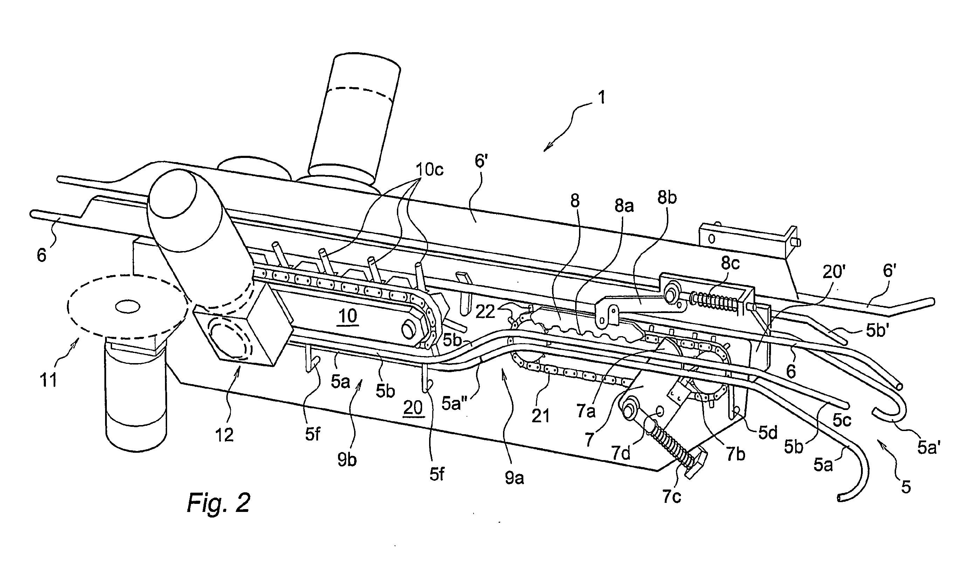

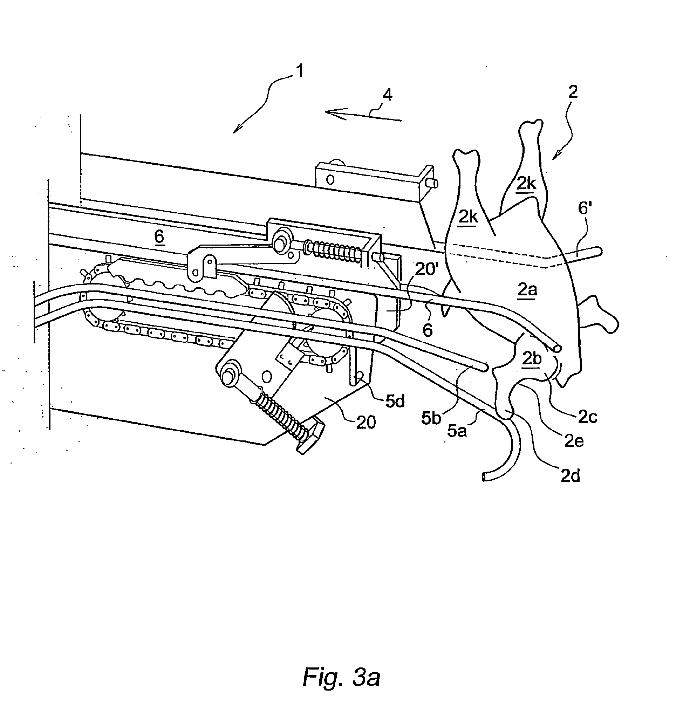

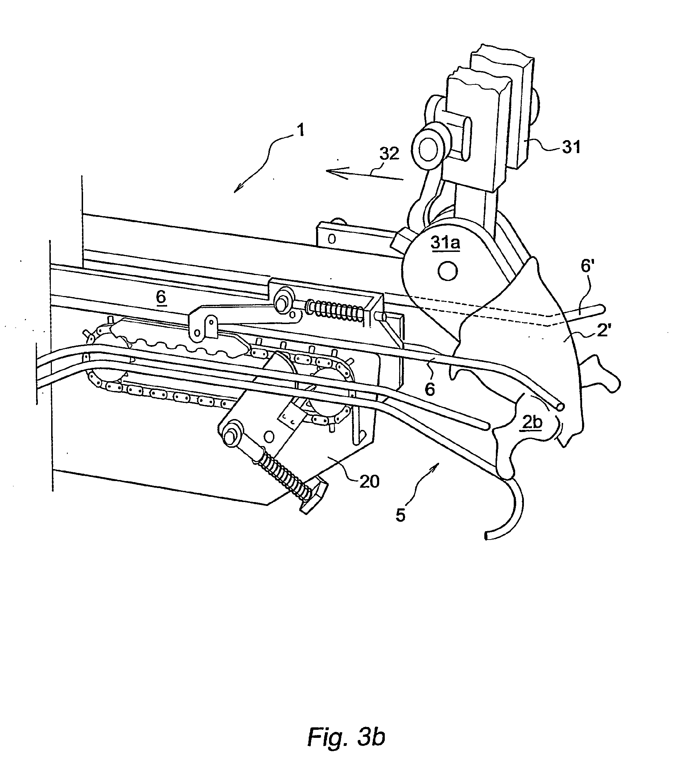

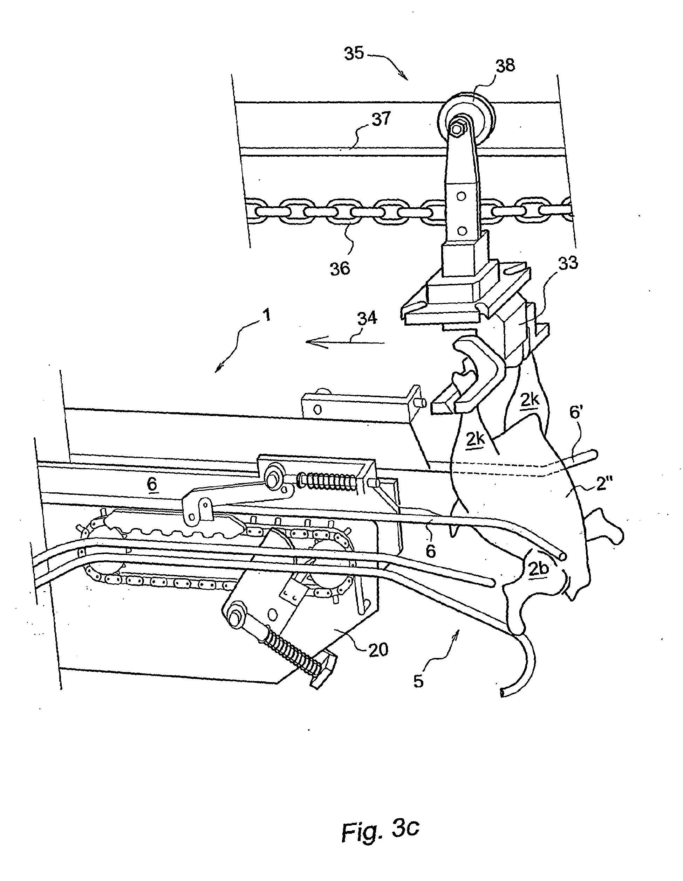

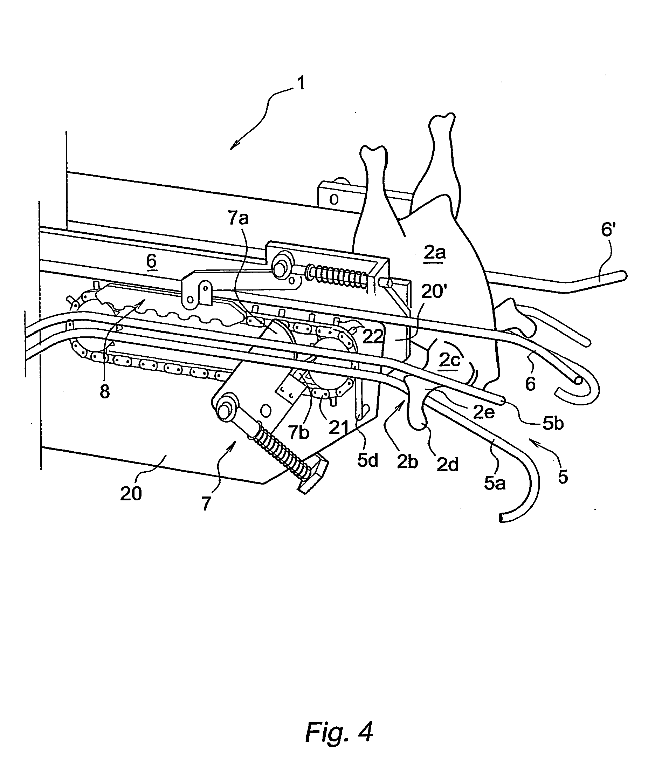

Fig. 2 shows a first embodiment of a wing processing station 1 according to the invention in its entirety. In this figure, the wing processing station 1 is disposed along a conveyor path. By way of example, the carcass parts shown in Figs. 3a-3c can be fed in series to the said wing processing station 1 using a conveyor device, an example of which is shown in Fig. 3c. The wing processing station 1 is symmetrical in form, with the result that two wings on either side of the body can be processed in the same way. Details of the wing processing station shown in Fig. 2 are illustrated in Figures 3-9 below.

Fig. 3a shows the introduction section of the wing processing station 1, to which a carcass part 2 is being supplied. In the embodiment shown, the carcass part 2 is supplied with its back facing in the conveying direction. Although in practice it is greatly preferred for the back to be introduced first, this is not a required measure. The carcass part 2 in Fig. 3a comprises a body 2a and two wings 2b, each with a lower member 2d and an upper member 2c, and two legs 2k. The introduction section of the wing processing station 1, shown in Figs. 2 and 3a-3c, is provided with body guides 6 and 6' and 20 and 20'. The body guides 6 and 6' guide the body 2a on either side. As a result, the body 2a can pass through the wing processing station 1 in a straight line. The guides 6 on the righthand side of the figures are still in rod form, whereas towards the left the guide 6 always comprises a plate-like part, along which the body of the poultry can be guided. The wing spreading guides 6 and 6' interact with the plates 20 and 20' in the wing processing station 1. The wings 2b are passed between these plates 20 and 20' and the guides 6 and 6' and are in this way spread away from the body 2a and then held in this spread position.

Fig. 3b shows another carcass part 2' which is secured to a carrier 31. Carrier 31 forms part of a conveyor device (not shown) with a conveyor path (not shown) along which the carriers 31 can be displaced in a conveying direction, denoted by arrow 32. The carcass 2' comprises only part of the body without legs and the two wings 2b, each having a lower member 2d and an upper member 2c. The carcass 2' is secured to a carrier part 31a which is designed to project into the body which is open on one side. By way of example, the said carrier part is conical. It is preferable for it to be possible for the carrier part 31a to be oriented in one or more directions by associated orientation means. As a result, the fowl with the wings is fed to the wing processing station 1 by the underside of the body. The wing processing station 1 is disposed along the conveyor path (not shown).

Fig. 3c shows an alternative carcass part 2" having a body, two wings 2b and two legs 2k. The legs 2k of the carcass part 2" are suspended in a carrier 33. The carcass part 2" can be displaced with the carrier 33 in a conveying direction 34. The carcass part 2" is secured to the carrier 33 in such a manner that the fowl with the wings 2b are fed to the wing processing station 1 by the underside of the body. Carrier 33 forms part of a conveyor device 35 which is driven with the aid of a chain 36. The conveyor device 35 comprises a conveyor path, in this case the rail 37, along which the carriers 33 can be displaced in the conveying direction 34 via a wheel 38.

The carriers 31 and 33 are only partly shown in Fig. 3b and 3c but are generally known, for example from patents EP 0 577 821 and EP 1 191 852. The carcass part is carried by a carrier, such as for example the carriers 31 and 33 shown in Fig. 3b and 3c, and fed to the wing processing station 1 with the aid of a conveyor device, such as the device 35 shown in Fig. 3c. While the carcass part is being carried by a carrier, the carcass part is processed in the wing processing station 1. The wing processing station 1 can expose the humerus bone of the upper member over part of its length in the vicinity of the elbow while the upper member is still attached to the body. For this purpose, the wing processing station 1 is designed in such a manner that the capsule in the vicinity of the elbow joint is removed from the upper member when the upper and lower members are separated from one another. In the process, the end of the humerus bone is exposed over part of its length in the vicinity of the elbow while the upper member is still attached to the body. In the wing processing station 1 shown, the exposure of the bone is mechanized.

It can be seen from Figs. 2-5 that the wing processing station 1 comprises fold-open guides 5 between which the upper member 2c of the wing 2b is guided, so that the skin 2e is tensioned between the lower member 2d and the upper member 2c. The upper member 2c of the wing 2b is clamped securely in a path 5c between rod-like guides 5a and 5b, with the result that the lower member 2d is held away from the body 2a and the wing 2b is brought into a "spread-open" position. This leads to tension on the skin 2e between the lower member 2d and the upper member 2c. In the situation illustrated, the guide 5b is located above the guide 5a. As seen in the conveying direction 4, the plates 20 and 20' in the wing processing station 1 are located downstream of the spreading device 5. The wings 2b are guided between these plates 20 and 20' and the guides 6 and 6', and in this way the wings are held spread away from the body 2a. The guide 5a is secured to the plate 20 with the aid of a bracket 5d, and the guide 5b is secured to the plate 20 by guides 5f. Furthermore, there is an additional conveyor guide with chain links 21 and pins 22, which carries the upper member 2c with it and holds it in place. This additional guide improves the accuracy. The number of pins 22 and the distance between them is adapted to the speed of the conveyor device for the poultry, so that an upper member of a bird is always conveyed by one pin.

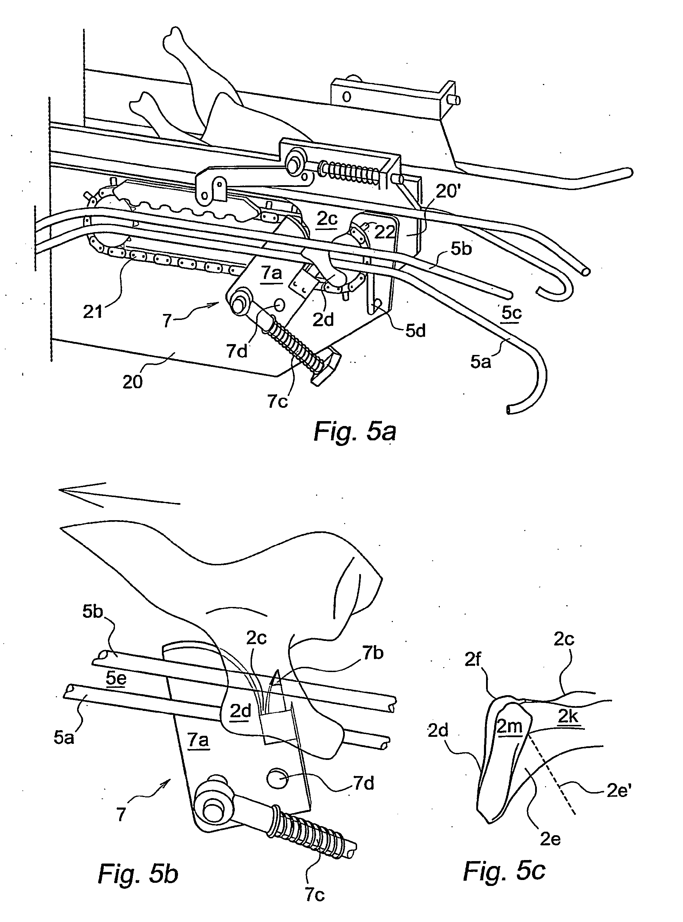

Fig. 5b shows the way in which first cutting means 7 operate. The cutting means 7 comprise a blade 7b which can tilt about pin 7d and is actuated by the passage of the wing itself. The cutting means 7 comprise a stop for the wing, in this case a rounded plate-like part 7a, which the wing 2b comes into contact with when it is moving between the guides 5a and 5b. The wing 2b moves the part 7a and the blade 7b connected to it counter to the spring force of spring 7c, with the result that the cutting means 7 pivots about pivot point 7d. As a result, a small blade 7b comes into contact with the inside of the elbow 2e. This blade 7b makes an incision, diagrammatically indicated by line 2e' in Fig. 5c, on the inside 2e of the elbow through the skin which has been placed under tension. This incision 2e' reduces the tension on the skin between the members 2c and 2d, so that the members of the bird can be moved apart more easily. This improves the accessibility of the connection (the elbow 2n) and simplifies the breaking of the connection between the members. It is preferable for this incision to be such that the capsule is not affected by it. Capsule is made up of cartilage with connecting ligaments and the like.

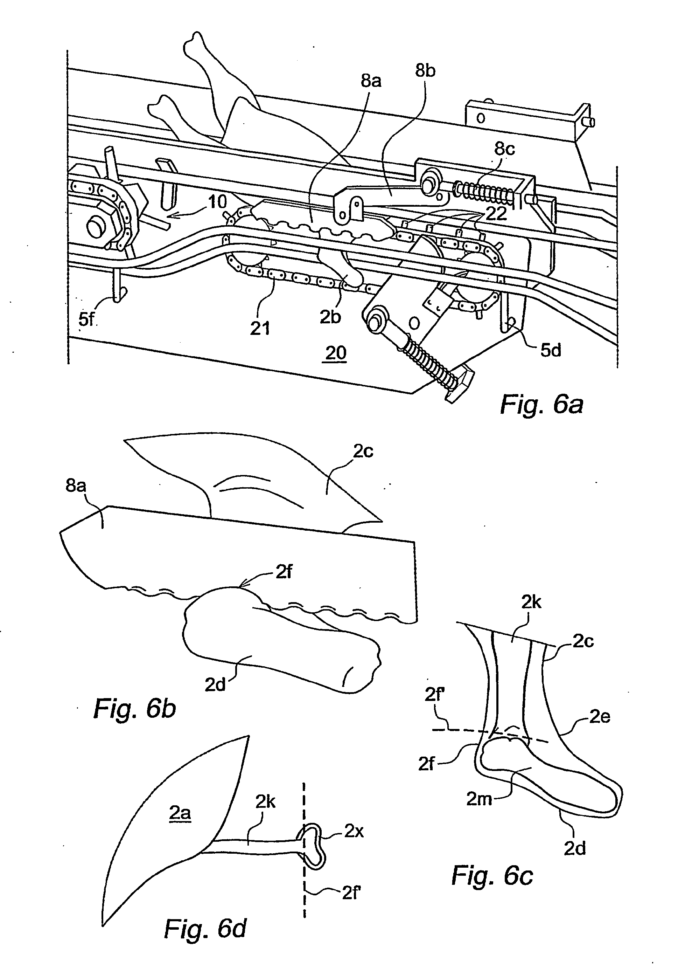

The wing processing station 1 also comprises two cutting means 8, shown in detail in Fig. 6a and 6b, which can make an incision in the wing 2b in such a manner that when the humerus bone (2k) is separated from the radius and ulna bones (2m), the capsule of at least one bone comes off the said bone. In the arrangement shown, the incision which is made is such that the capsule of the humerus bone comes off the said bone when the upper and lower members are separated from one another. The capsule is then discharged with the lower member. The two cutting means 8 in this case comprise an elongate serrated blade 8a. The blade 8a is in this case parallel to the conveying direction of the carcass part. Furthermore, the blade 8a is in this case to a certain extent vertically flexible, for example with the aid of an arm 8b and a spring 8c. Some other form of slightly wobbling mounting with the aid of a plurality of pivot points is also possible. The blade 8a forms an incision, diagrammatically indicated by line 2f' in Fig. 6c and 6d, as far as into the capsule in the vicinity of the elbow, without damaging the humerus 2k, ulna and radius bones 2m. The vertically and if appropriate also laterally flexible arrangement of the blade 8a is advantageous because the thicknesses of the wings are not identical. The blade 8a makes an incision in each wing with an identical force. The force of the spring mechanism can be adapted in such a manner that the capsule is cut into sufficiently but the bone is not affected. As a result of the capsule 2x being cut into at the location indicated by incision 2f', during the subsequent breaking of the elbow joint, the capsule 2x in the vicinity of the elbow joint will be removed from the humerus 2k belonging to the upper member 2c of the wing 2b. As a result, the humerus bone 2k is exposed over part of its length in the vicinity of the elbow.

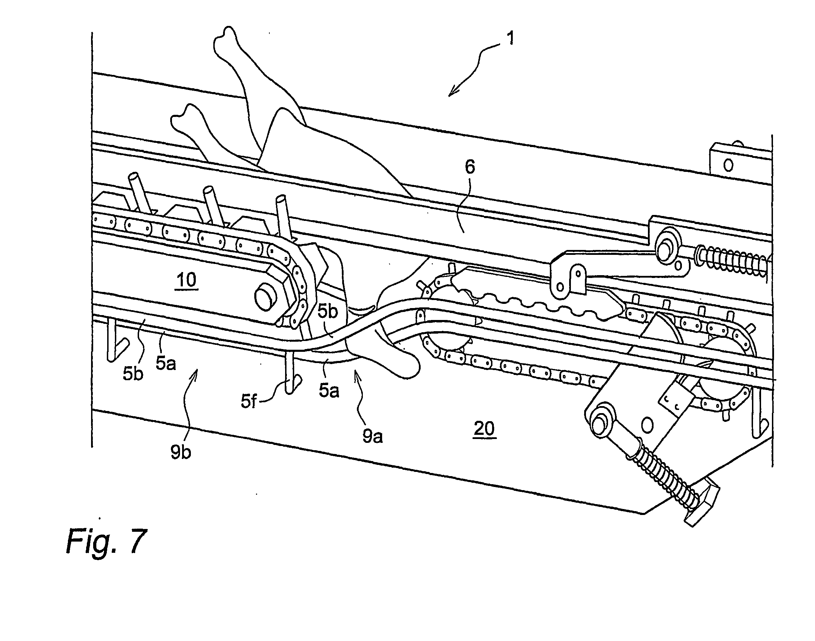

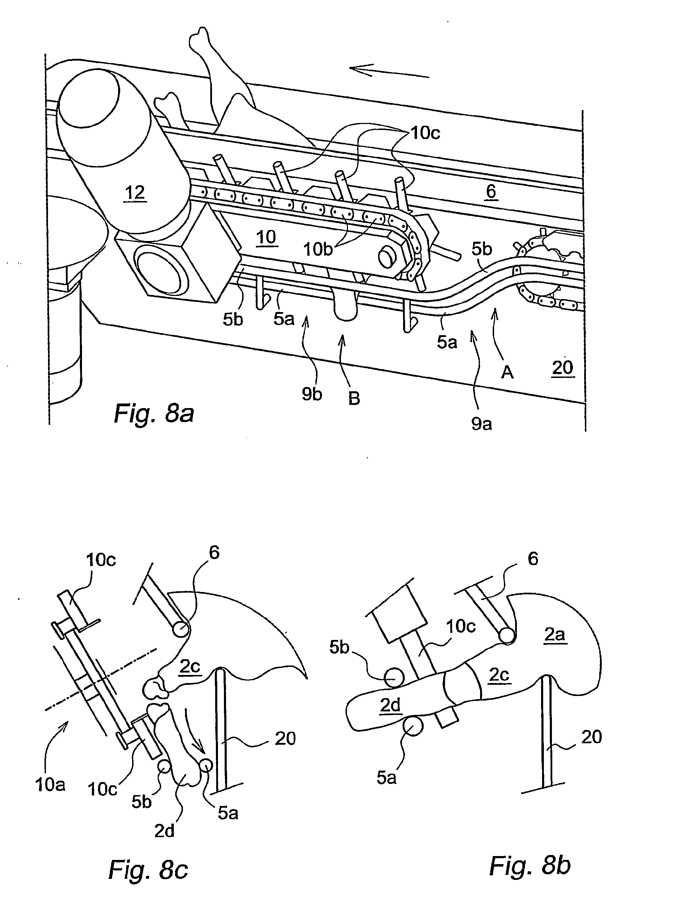

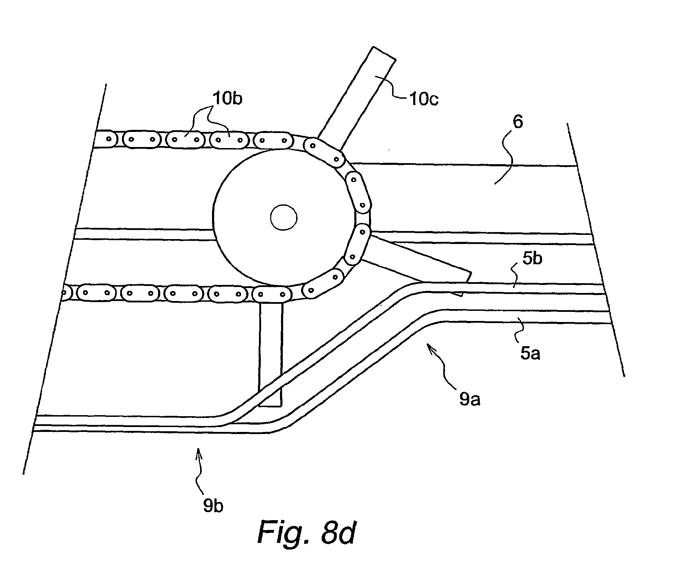

Fig. 7 and Fig. 8 a-d show forced guidance means 5a and 5b which separate the humerus bone 2k from the radius and ulna bones 2m, in such a manner that the elbow breaks while the humerus, radius and ulna bones themselves do not break. The lower member 2d of the wing can advance past the forced guidance means 5a and 5b. There is a bend 9a in the guides 5a and 5b between which the wing 2b is advancing. This bend 9a forms a separation pattern 9a in the forced guidance means 5a and 5b which is such that the lower member 2d moves counter to the pivot direction of the elbow 2n and the elbow 2n breaks, whereas the humerus bone in the upper member 2c and the radius and ulna bones in the lower member 2d themselves do not break. In this way, the humerus bone 2k is separated from the radius and ulna bones 2m, during which process, on account of the incision which has been made by the second cutting means 8, the capsule will come off the humerus bone 2k and be carried along with the lower member 2d.

The forcing means which separate the radius and ulna bones from the humerus in this case also comprise conveyor means 10 for the wing, in this case for the lower member. The conveyor means 10 in this case have a rotating chain which is driven by a motor 12 and has chain links 10b and pins 10c which project at a distance from one another. The chain runs in such a manner that the lower member 2d of the wing 2b moves in between two pins 10c, at a location where the chain is moving clockwise around a turning point. As a result, the pins 10c press the lower member 2d downwards, so that the elbow 2n, the connection between the lower member 2d and the upper member 2c of the wing, breaks. The conveyor means 10 also help to advance the wing 2b.

Subsequently, the forced guidance means 5a and 5b form a first turn-up pattern 9b. As a result, the lower member 2d is manoeuvred in such a manner that the end of the lower member 2d in the vicinity of the elbow is pressed towards the body 2a so that at least the meat at that end of the humerus bone 2k of the upper member 2c which is remote from the body comes off the bone and is turned up while the upper member 2c is attached to the body 2a. This can be seen from Figs. 8b and 8c.

Fig. 8b shows a cross section through part of the device at point "A" in Fig. 8a. Fig. 8c shows a cross section at point "B" in Fig. 8a. It can be seen from Fig. 8b that the guide 6 and the plate 20 engage on either side at the location where the wing 2b is attached to the body 2a. The guides 5a and 5b are located on either side of the lower member 2d. A pin 10c comes into contact with the lower member 2d in the vicinity of point "A", with the result that it carries the wing with it and contributes to breaking the elbow 2n. At the same time, the path defined by the guides 5a and 5b changes in a downward bend 9a, which simultaneously breaks the elbow 2n. Then, the guides 5a and 5b follow that end of the lower member 2d which is furthest away from the body 2a. The lower member 2d is carried onwards between two pins 10c, as shown in Fig. 8c, with the result that the end of the lower member 2d is pressed towards the body 2a in the vicinity of the elbow 2n. As a result, the meat of the humerus bone 2k in the vicinity of the elbow 2n comes off the bone and is turned up. It can be seen from the side view presented in Fig. 8d that at the same time the bend 9a forces the wing 2b and the pin 10c touches the wing 2b. The pin 10c moves along behind the guides 5a and 5b.

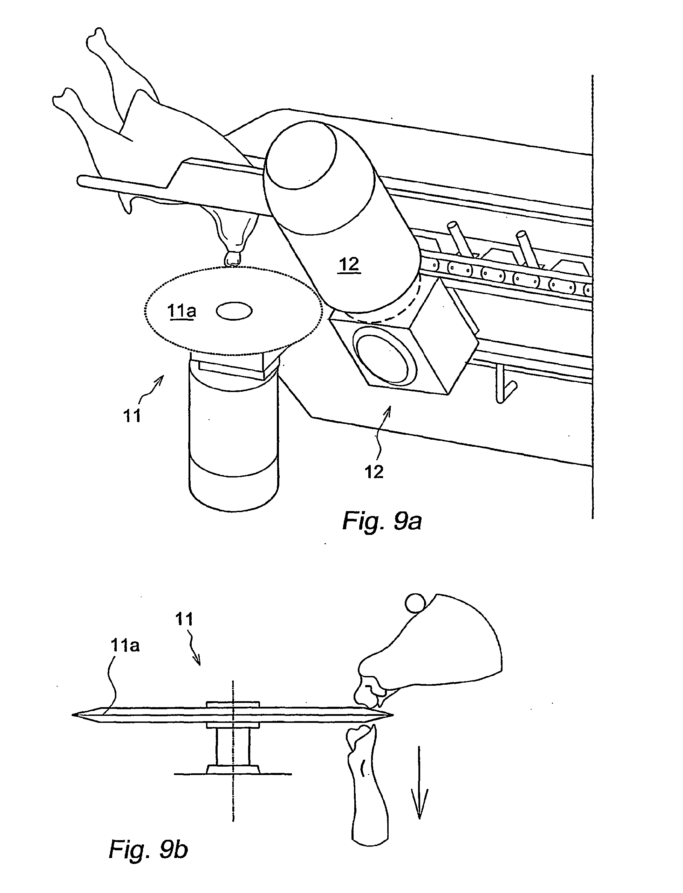

Figs. 9a and 9b show a member separation device 11 in which the lower member 2d is separated from the upper member 2c while the upper member 2c is attached to the body 2a. The member separation device 11 comprises a rotating blade 11a which cuts through the skin and meat which are still connecting the lower member 2c to the upper member 2d.

The wing processing station shown is designed in such a manner that in the vicinity of the elbow that end of the humerus bone 2k, belonging to the upper member 2c of the wing 2b, which is remote from the body 2a is exposed as a result of meat being turned up, while the associated upper member 2b is still attached to the body 2a, resulting in the preparation of a tulip. If the device according to the invention, downstream of the wing processing station shown, is also equipped with additional cutting means, the upper member 2c can be removed from the body 2a, for example in a known way.

It is also possible for the device according to the invention also to be equipped with a device for further processing of the upper member which has been removed, for example by forming tulips here too.

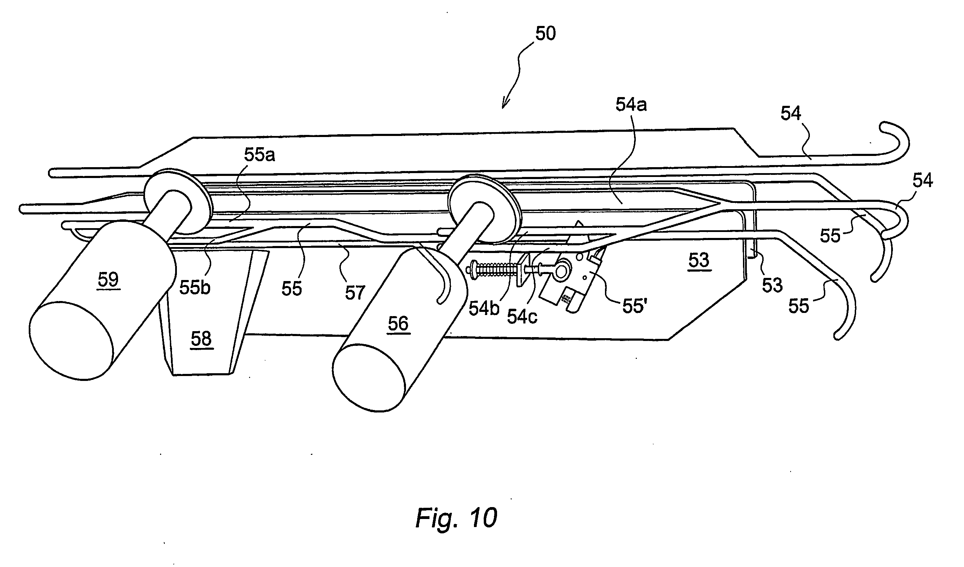

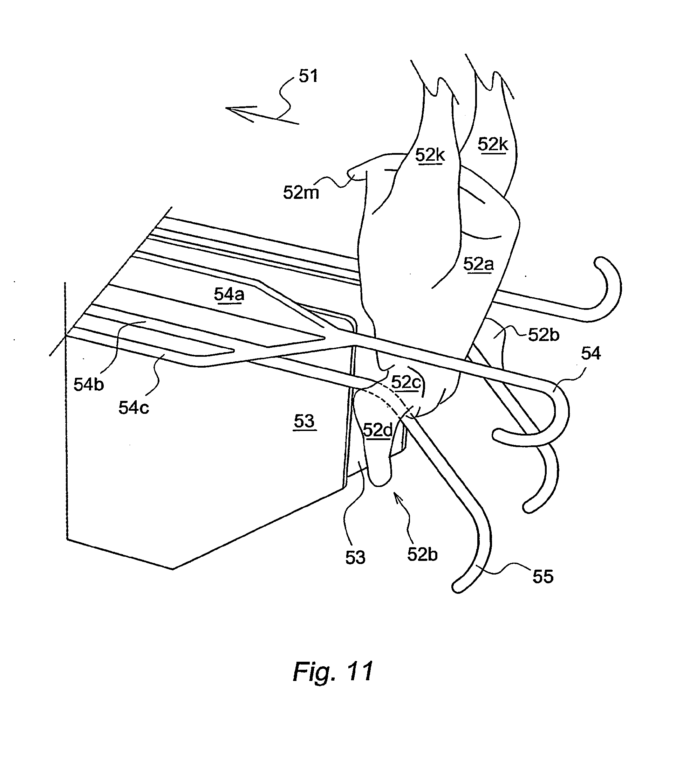

Fig. 10 shows an alternative preferred embodiment of a wing processing station 50 according to the invention, details of which are expounded upon in Figs. 11-16. The wing processing station 50 can expose part of the length of the bone(s) in the vicinity of the elbow for both the upper and lower members of a wing, with the result that a tulip is prepared from both members. For this purpose, the capsule in the vicinity of the elbow joint is removed from both the humerus bone of the upper member and the radius and ulna bones of the lower member. This is done automatically while the upper member is still attached to the body and the lower member is still attached to the upper member.

It can be seen from Fig. 11 that a carcass 52 having a body 52a, legs 52k and wings 52b is being fed to the wing processing station 50 in a conveying direction 51. This is done with the aid of a conveyor device (not shown) having carriers which carry the carcasses 52. In the embodiment shown, the back of the carcass is being supplied in the conveying direction 51. It can be seen that tail 52m is located to the left of the body 52a. Although in practice it is certainly preferred for the back of the fowl to be introduced first, this is not a required measure. The wing processing station is symmetrical in form, which means that both wings of the bird can be subjected to the same processing in the wing processing station. The body is guided over plates 53 while the wings 52b are held between fold-open guides 54 and 55 located above one another. As a result, at the same time the wing 52b is separated from the body 52a and the wing 52 is folded open as a result of the upper member 52c of the wing being pressed outward by the fold-open guides 54 and 55. The lower member 52d is located outside the fold-open guides 54 and 55.

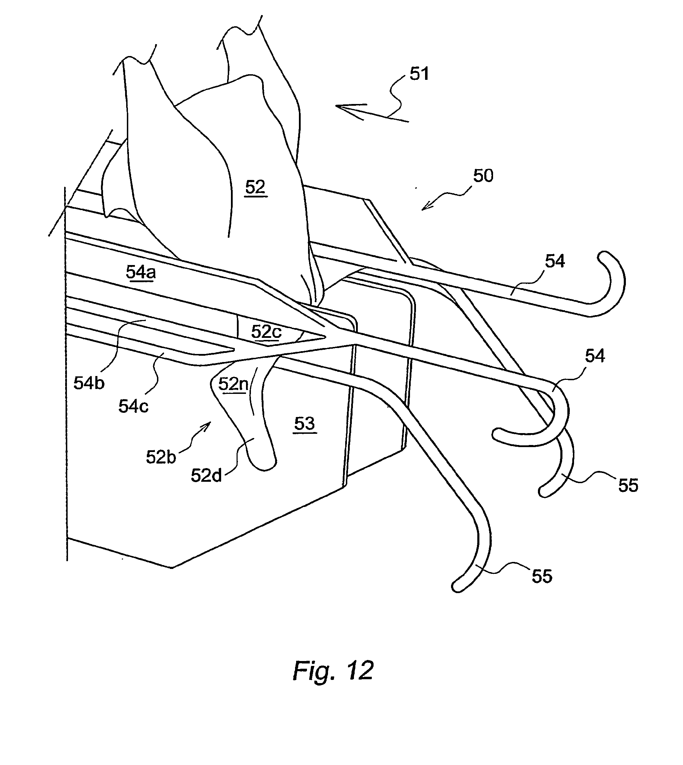

In Fig. 12 the carcass 52 has been conveyed a distance further into the wing processing station 50 in the conveying direction 51. It is clearly apparent that the upper member of the wing 52c is located between the upper guide 54 and the lower guide 55. Elbow joint 52n is located just outside the guides 54 and 55 and is being pulled securely onto them. This ensures clear positioning of the elbow joint 52n. The guide 54 is in this case initially in rod form but further on in the conveying direction 51 is shaped as an inclined plate 54a, along which the top side of the upper member 52c is displaced. The plate 54a is positioned obliquely, as seen perpendicular to the conveying direction, from the attachment of the upper member 52c to the body 52a together with the shape of the body 52a. Furthermore, the guide 54 splits into two parallel guides 54b and 54c which extend parallel to the original guide 54 at the entry part of the wing processing station 50, at a distance further away from the carcass 52.

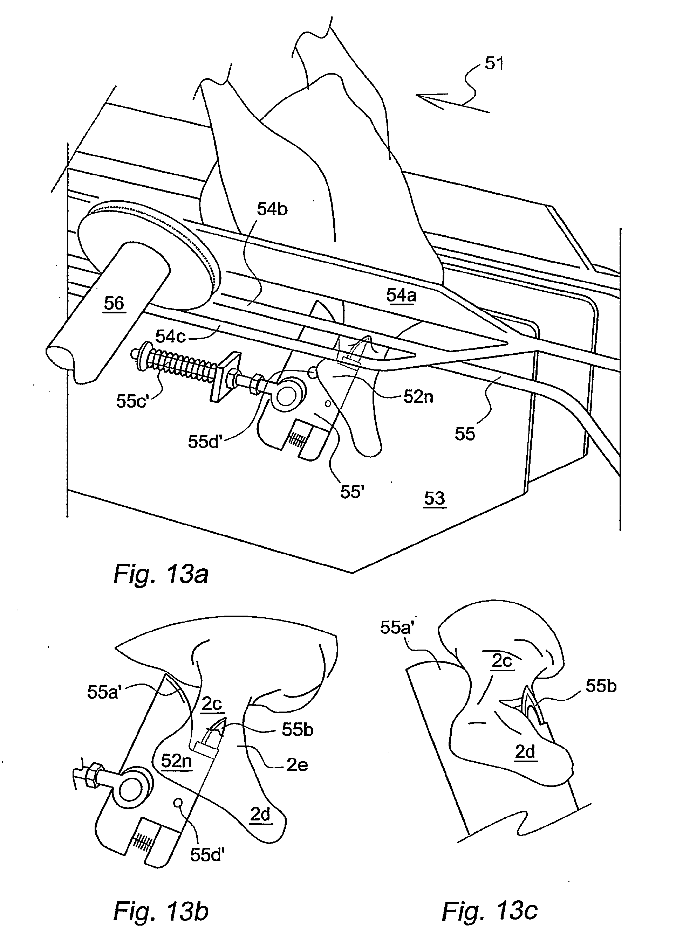

On account of the clear positioning of the elbow joint 52n effected by the guides 54 and 55, the elbow 52n can be cut into at the optimum location by first cutting means 55', as shown in Figs. 13a-c. The first cutting means 55' is formed as a tiltable blade which is actuated by the wing itself. The wing 52b advances in the conveying direction 51, with the result that it moves onto the rounded part 55a' of the cutting means 55' and as a result effects tilting of the cutting means 55' about the tilting pin 55d' counter to the action of the spring 55c'. As a result, the blade 55b' moves into the path of the elbow 52n of the wing 52b, outside the guide 55. The blade 55b' makes an incision on the inside of the elbow 2e, with the result that the tension between the lower member 2d and the upper member 5c is reduced. This, for example, simplifies the processing of the wing during the subsequent exposing of the bone.

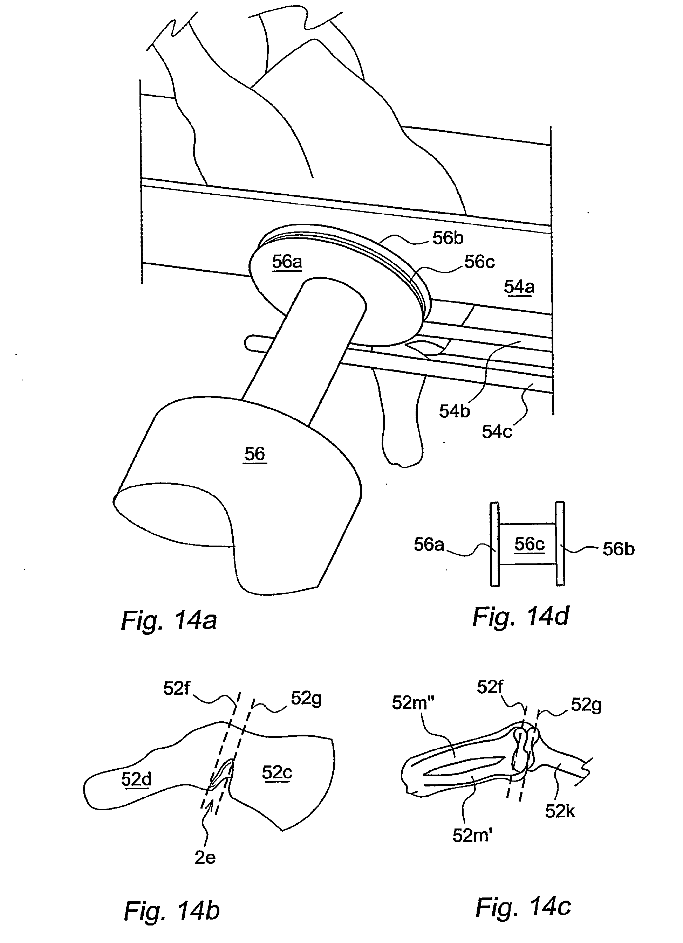

Figs. 14a-14d show second cutting means 56 which make two incisions next to one another extending into the capsule in the vicinity of the elbow. When the bones of the members are then separated, the capsule in the vicinity of the elbow will come off all the bones. The elbow 2n is cut into at two locations, denoted in Figs. 14b and 14c by lines 52f and 52g. For the positioning of the elbow 2n for these incisions, the guide 54 is split here into guides 54b and 54c, between which guides is located the part of the elbow 52n which is cut into. The second cutting means 56 here comprise two parallel rotating blades 56a and 56b, which each cut into a capsule part in the vicinity of the elbow: one blade 56b cuts into the capsule part at the end of the humerus bone 52k in the vicinity of the elbow 52n so as to form incision 52g, and the other blade 56a cuts into the capsule part at the end of the radius and ulna bones 52m in the vicinity of the elbow 52n so as to form incision 52f. These incisions 52f and 52g continue into the capsule part in question but do not damage the bone. To achieve this, a (plastic) disc 56c is mounted against and/or between the rotating circular blades 56a and 56b, preventing the blades from being able to penetrate too far into the elbow joint 52n. The upper guides 54b and 54c end after the second cutting means 56, as seen in the direction of advance 51. The guides 54a and 55 are retained and guide the body 52a and the bottom of the upper member 52c. As a result, the upper member 52c remains positioned horizontally.

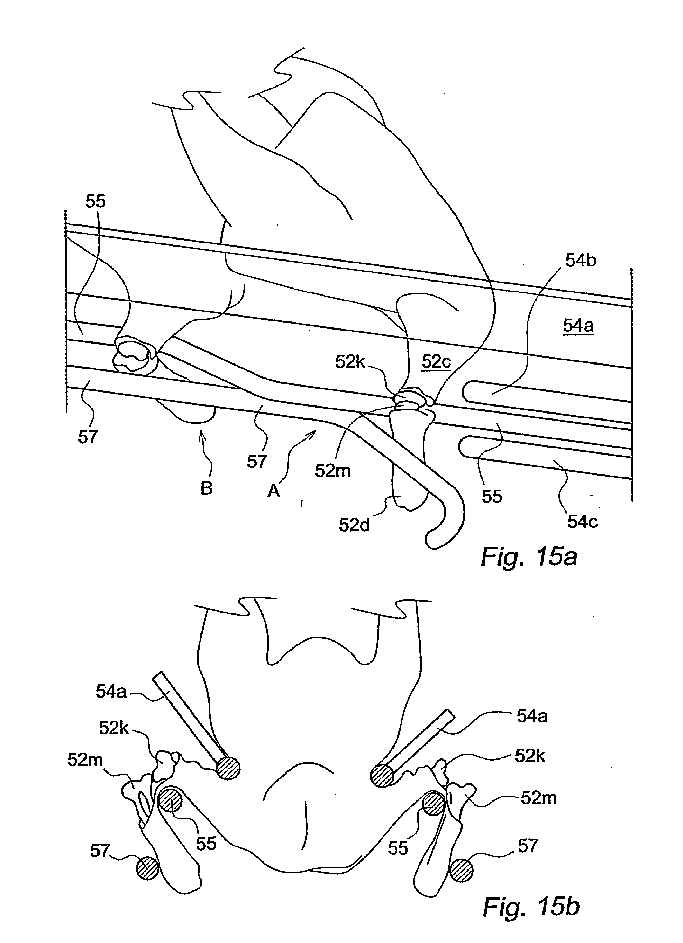

Figs. 15a and 15b show forced guidance means 57 which, together with the guides 55 and 54a, separate the humerus bone 52k from the radius bone 2m' and ulna bone 2m" (jointly denoted by 2m), in such a manner that the elbow 2n breaks while the humerus, radius and ulna bones themselves do not break. Since tulips are being prepared from both the upper member 52c and the lower member 52d using the wing processing station 50 shown, and the elbow is cut into at two locations for this purpose, the overall result is that when the elbow is broken the capsule is completely detached from both bone ends of both members. It is possible for an additional guide (not shown), which engages over the top of the capsule, to be fitted for this purpose. The lower member 52d is received by the forced guide 57, and the forcing pattern of this guide at point "A" in Fig. 15a, shown in cross section in Fig. 15b, bends the lower member 52d counter to the natural bending direction of the elbow, which as a result is broken in the desired way. Both bone ends are then exposed.

Then, the guide means 55 and 57, at point "B" in Fig. 15a, form a turn-up pattern which is such that the lower member 52d is pressed horizontally inwards. As a result, the meat on the upper member 52c is turned up and the last connections (for example the membranes) between the meat and humerus bone 52k are released. For this purpose, the guide 55 moves inwards away from the guide 57. Then, the lower member 52d is moved towards the body 52a as close as possible along the upper member 52c, in order in this way to turn up the meat on the lower member 52d. The tulips have now been prepared and merely have to be cut off.

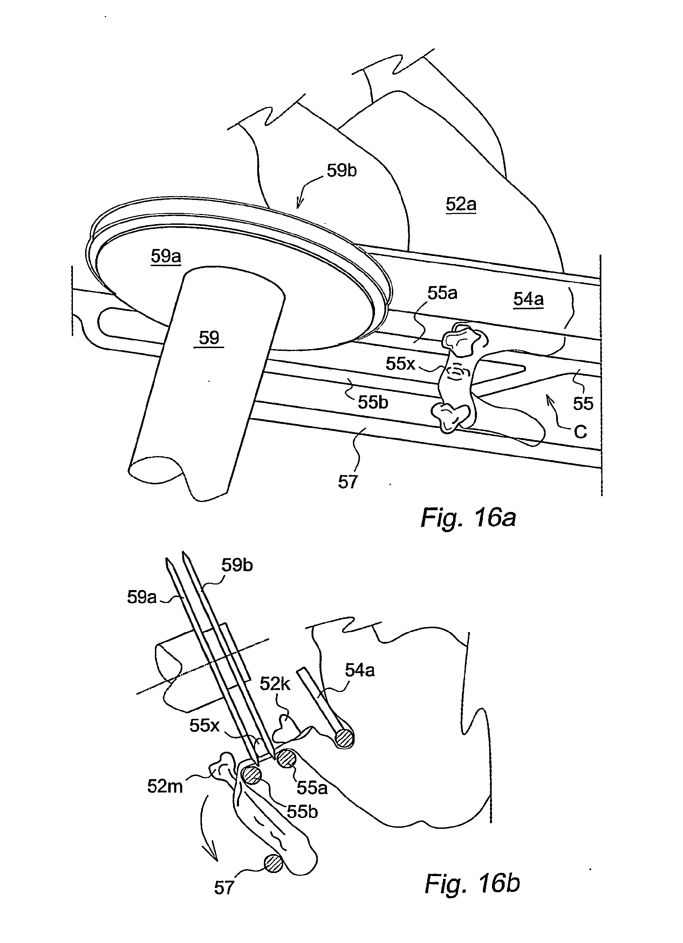

It can be seen from Fig. 16a that the guide means 55 and 57 form a second pattern at point "C", with the result that the members can easily be separated. Here, the guide 55 is split into two parallel guides 55a and 55b, the guide 55a being located on the side of the upper member 52c at a position somewhat closer to the body 52a, while the guide 55b is located on the side of the lower member 52d, somewhat further outwards from the body 52a and further away from the body 52a in the vertical direction. The two guides 55a and 55b are responsible for clear positioning of the capsule 55x. A double (rotating) blade 59 cuts between the upper and lower members of the wing, which are now only attached to one another by a meat connection, so as to separate the two members from one another. The double blade, comprising blades 59a and 59b located at a distance from one another, is advantageous for removing the capsule 55x, which has remained attached to the meat connection and is undesirable. The positioning with the guides 55a and 55b ensures that the capsule 55x always comes to lie between the blades. The loss of meat is also minimized in this way, since it is possible to make incisions closely along the capsule 55x. After it has been cut off, the tulip prepared from the lower member 55d will drop out of the guides and can be discharged from the wing processing station 50 with the aid of the discharge 58. It can be collected in a collection trough or moved onto a moving belt or the like.

It is possible that the tulip formed from the upper member 52c will subsequently be cut off the body using a cutting device which is not shown.

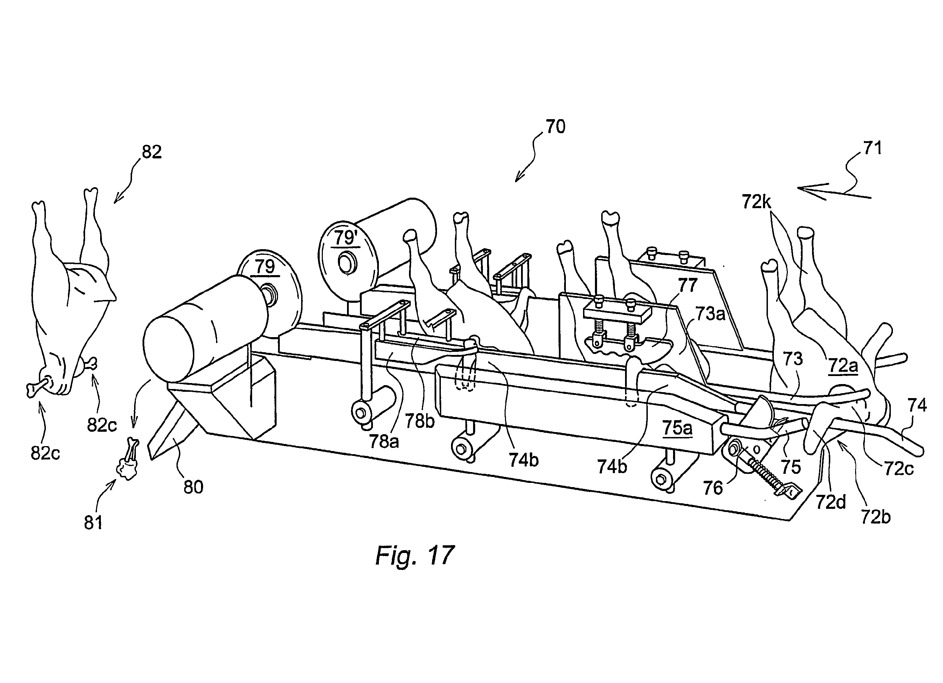

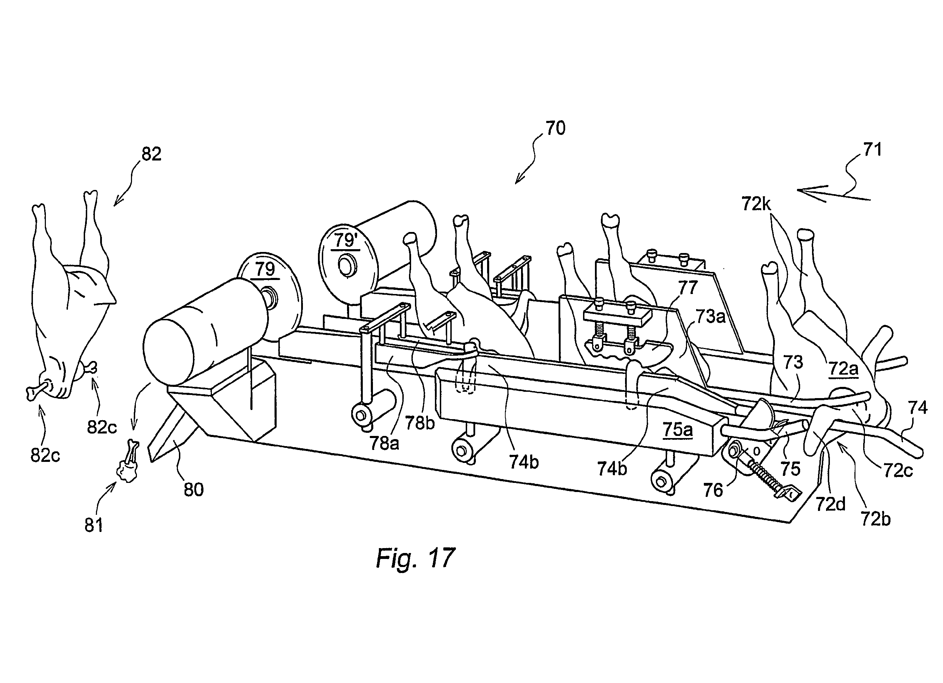

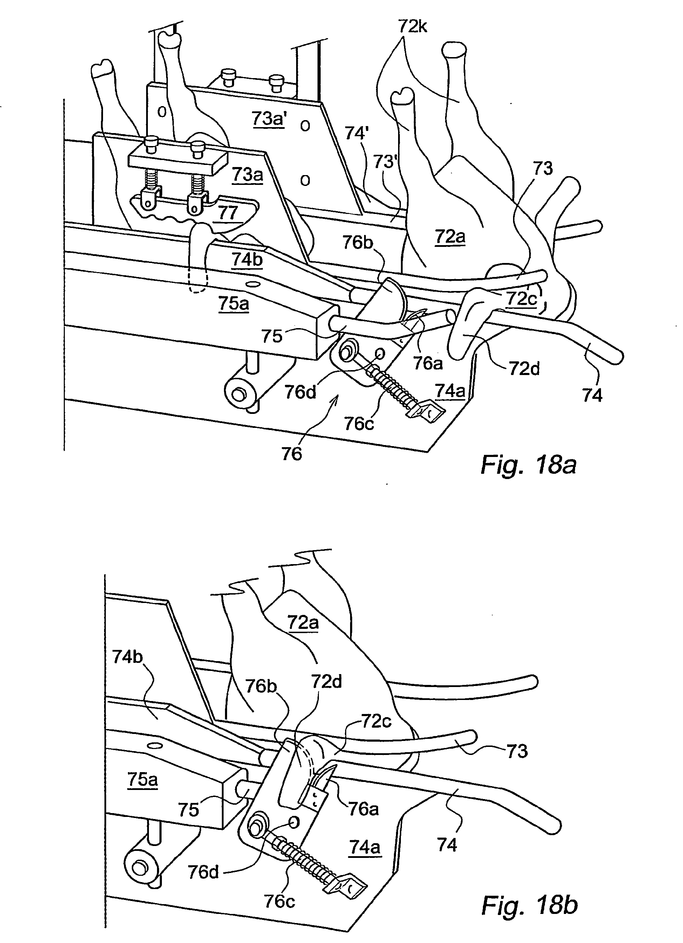

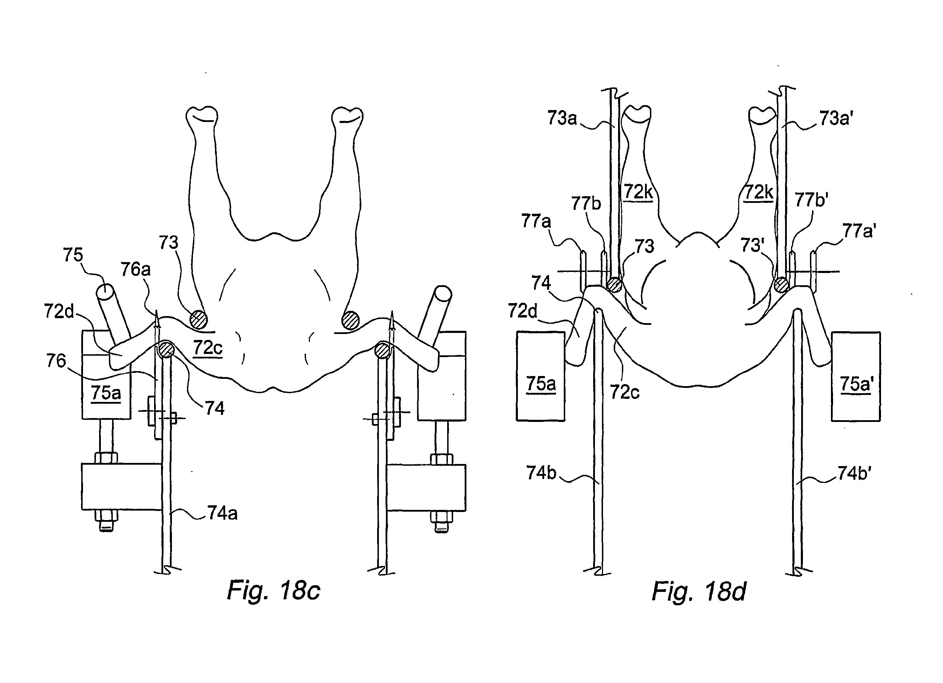

Fig. 17 shows a second alternative preferred embodiment of a wing processing station 70 according to the invention, details of which are expounded upon in Figs. 18-20. The wing processing station 70 can expose a part of the length of the bone in the vicinity of the elbow on both the upper and lower members of a wing, resulting in the preparation of a tulip from both members. For this purpose, the capsule in the vicinity of the elbow joint is removed from both the humerus bone of the upper member and the radius and ulna bones of the lower member. This is done automatically while the upper member is still attached to the body and the lower member is still attached to the upper member.

Carcasses 72 are fed to the wing processing station 70 on the righthand side in Fig. 17 as a result of the carcasses 72 being secured to carriers (not shown) and these carriers being conveyed in the conveying direction 71 with the aid of a conveyor device (not shown). Here, the carcasses are conveyed along a conveyor path (not shown) with their back facing forwards; the wing processing station 70 is also disposed along the said conveyor path. The carcass 72 shown comprises a body 72a, legs 72k and wings 72b. The wings 72b comprise an upper member 72c having a humerus bone and a lower member 72d having a radius bone and an ulna bone. The wing tip has been removed, together with the capsule etc., from the lower member 72d before the carcass enters the wing processing station 70. The wing processing station 70 is symmetrical in form, with the result that the two wings 72b of the carcasses can undergo the same processing.

As can be seen in detail in Fig. 18a, the upper member 72c is received between spread-open guides 73 and 74 (and of the other wing between guides 73' and 74') and then conveyed. The upper guide 73 is disposed parallel to guide 74 and is located just above this guide 74. Guide 73, at the start as seen in the conveying direction 71, is in the form of a rod 73, and then further on in the conveying direction 71 is in the form of an upwardly extending plate 73a. Guide 74 is likewise shaped as a rod at the beginning of the wing processing station 70 and then somewhat later becomes a downwardly extending plate 74a, but later is also provided with an upwardly extending plate 74b. This will be dealt with in more detail below. After the upper member 72c has been received by the guides 73 and 74, further on in the conveying direction 71 the top side of the lower member 72d comes into contact with a rod-like guide 75.

Figs. 18b and 18c show the way in which a tiltable blade 73 operates. When the wing, as a result of the ongoing conveying movement in the conveying direction 71, moves onto the rounded part 76b of the blade, the blade tilts about pivot point 76d counter to the action of spring 76c. As a result, the blade 76a comes into contact with part of the wing 72b. As a result of the wing 72b being positioned accurately by the guides 73, 74 and 75, as can be seen clearly in Fig. 18c, the blade 76a cuts accurately into the skin between the lower member 72d and the upper member 72c of the wing 72b; in the inside of the elbow joint. The lower member 72d is not yet touching the guide 75 at the moment of incision by the blade 76.

The guides 74 and 75 therefore initially hold the wing 72b in position for the blade 76 to cut into it, and then the wing 72b is folded open further for further processing. This folded-further situation is shown in cross section in Fig. 18d. As seen in the conveying direction 71, the wing 72b is folded open further as a result of the lower member coming into contact with the guide 75 and this guide 75 coming to lie closer and closer to the guides 73 and 74, with the result that the upper member 72d comes to lie closer to the lower member 72c and parallel to it. The guide 74 here also changes into a folding plate 74a which is disposed slightly further outwards than the guide 73. As a result, the elbow comes to lie over the folding plate 74b and the lower member is held in place by the guide 75a. In this way, the guide 73 holds the wing 72b in place at the body 72a at the area resembling the armpit. The body 72a and the legs 72k are pressed together somewhat by the plate-like part 73a of the guide. The elbow has thus moved upwards and towards the carcass. That end of the lower member 72d which is remote from the elbow moves downwards and towards the body 72a. This is a type of concertina movement, during which the shoulder remains in position and moves in the natural bending direction and the elbow remains in position but moves counter to the natural bending direction. When the wing has been positioned as shown here, the capsule on the outside of the elbow can be cut into using a resiliently mounted double blade 77a and 77b as shown in Figs. 17, 18a and 18d. The elbow is cut into at two locations, similar to the situation shown in Figs. 14b and 14c. As a result, the bone end of both the upper member 72c and the lower member 72d can be exposed. It is preferable for the guides 74 and 47b and the guide 73 and 73a and also the guide 75 to move ever closer to the body 72a, as seen in the conveying direction 71. The elbow has now been broken and the upper member separated from the lower member. The wing is still held together by skin and meat which is still present around the bones and the capsule. On the top side of the elbow, the skin together with the capsule has been cut into by the blades 77a,b, and as a result the bone ends of the upper and lower members have been exposed. Therefore, only on the underside of the elbow is the wing still held together by skin and meat.

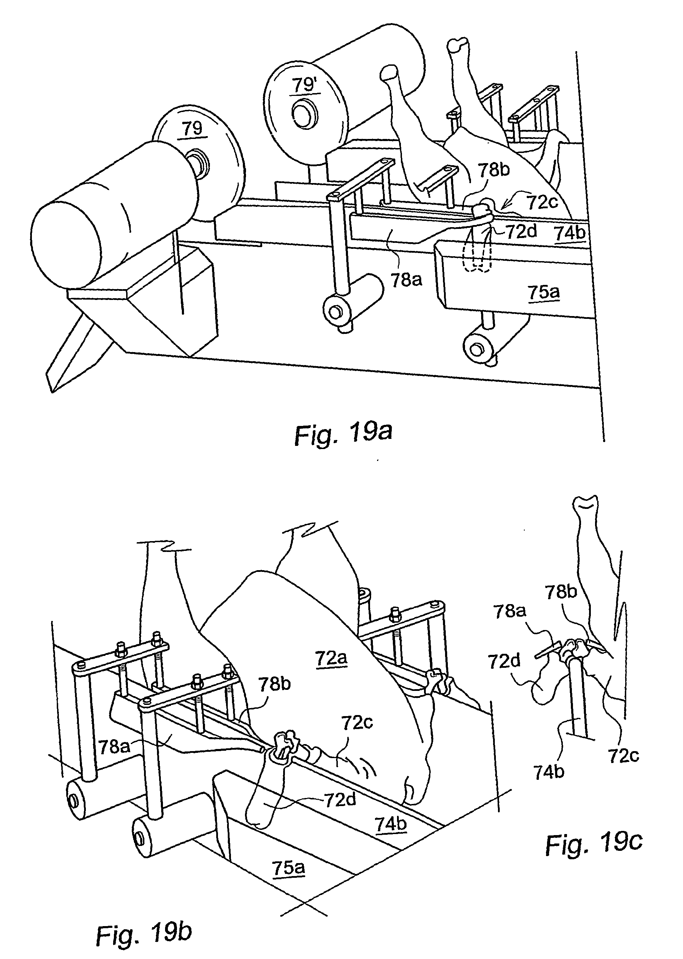

Figs. 19a, 19b and 19c show how the bone ends of the upper member 72c and the lower member 72d are exposed further by the meat and, for example, membrane which is still present here being turned up with the aid of scraper plates 78a and 78b. The elbow is still positioned over the folding plate 74b. The meat at the bone ends can be turned up further by the scraper plates 78a and 78b disposed close to this folding plate 74b. The wing 72b is received in such a way that the beginning of the scraper plates 78a and 78b moves between the bone end and the meat. The scraper plates then move downwards at the underside so that the meat is turned up.

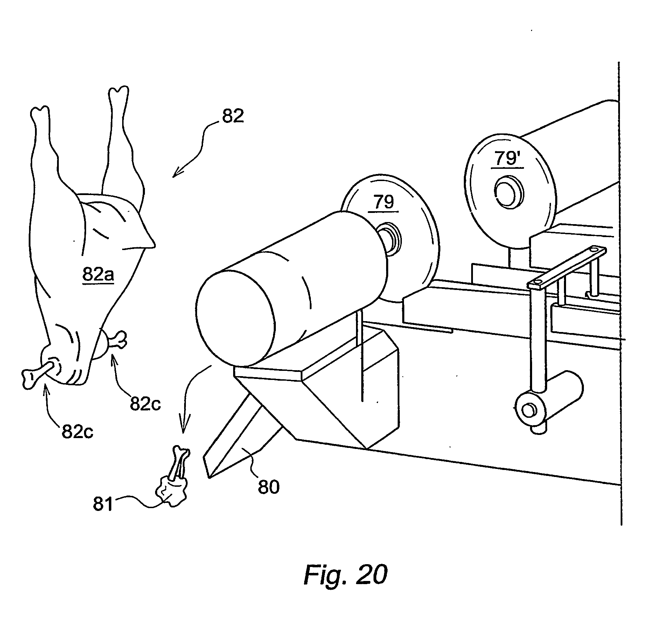

Fig. 20 shows a member separation device 79 which can remove the lower member 72d from the upper member 72c and the body 72a. The lower member 72d, which has been prepared to form a tulip, can then be discharged via path 80 as tulip 81. The second end product 82 which comes out of the wing processing station 70 is a body 82a with two upper wing members 82c attached to it, which have been prepared to form a tulip.

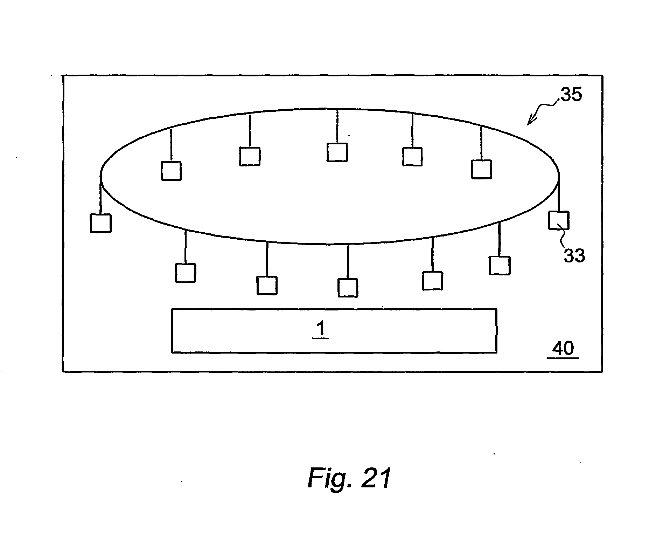

Fig. 21 shows what is known as a stand-alone device 40 having a wing processing station 1 as shown in Figs. 2-9; the carcass parts (not shown here) are fed with the aid of a conveyor device 35 to the wing processing station 1 and can be processed therein while the carcass part is being carried by a carrier 33.

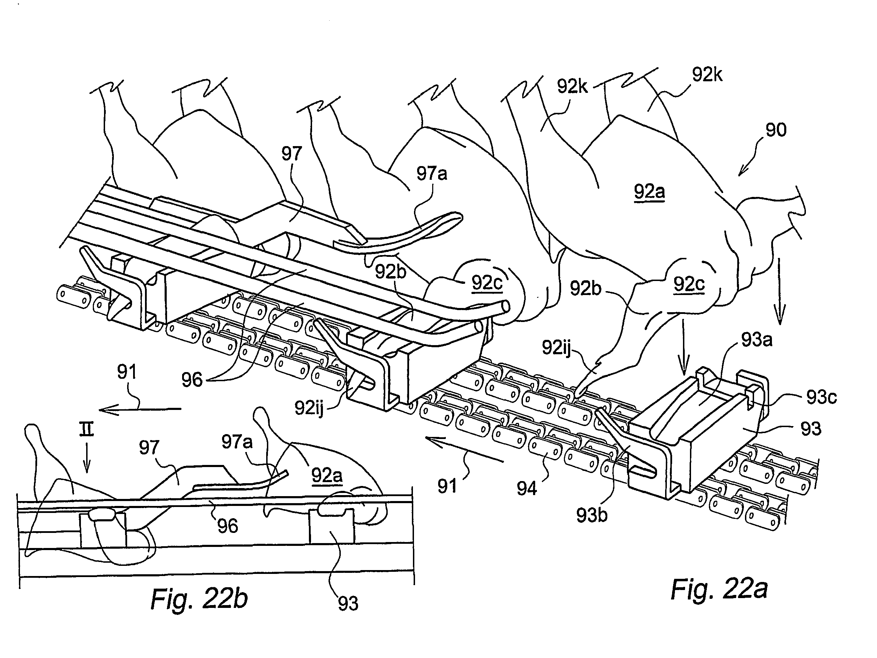

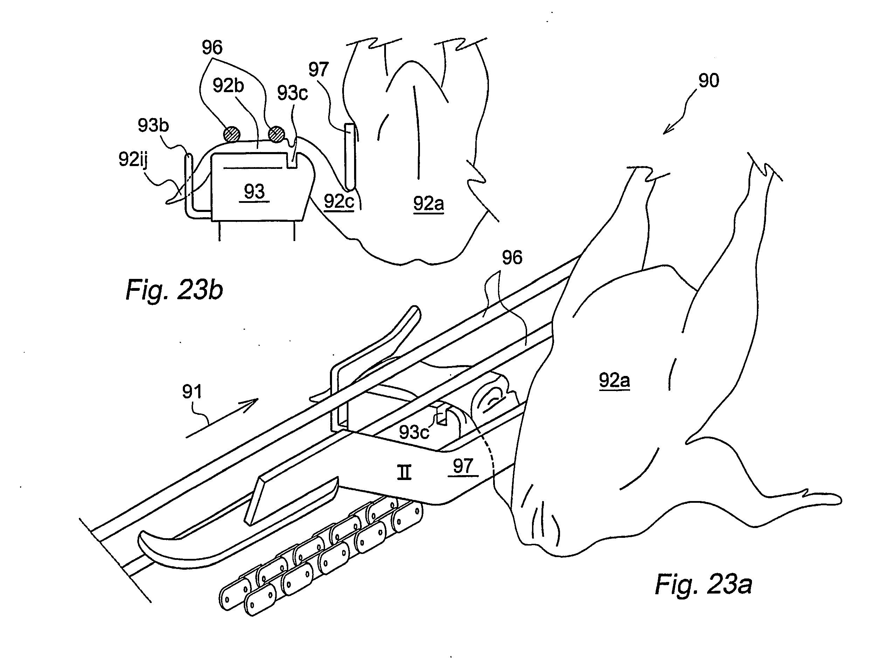

Figs. 22 and 23 show a fifth embodiment of a wing processing station 90 according to the invention. Fig. 22a shows a perspective view of how a carcass 92 is fed to the wing processing station 90. In the embodiment shown, the carcass 92 comprises a body 92a, two legs 92k and two wings with an upper member 92c, a lower member 92b and a wing tip 92y. The product is positioned in such a manner that the wing can be placed in recess 93a of wing conveyor 93; in the embodiment shown, the wing tip 92y is positioned beneath the wing tip guide 93b. This can be done, for example, by hand. The wing conveyor 93 is disposed movably by means of drive 94, so that both the product 92, which is located on a carrier (not shown) in a conveyor device (not shown), and the wing conveyor 93 can move in conveying direction 91. Furthermore, two guides 96, beneath which the lower member 92b of the wing is clamped, are arranged in the conveying direction 91. At location I, a small incision can be made in the skin in the vicinity of the elbow using a blade (not shown). As a result, the wing can be folded open more easily. Further on in the conveying direction 91 is a guide 97, the rising part 97a of which first of all moves over the upper member 92c. It can be seen in Fig. 22b that at position II the guide 97 runs downwards, with the result that the upper member is forced downwards. This can also be seen in Fig. 23a. It can also be seen from Fig. 23b that the guide 97 moves not only downwards but also in the direction of the body 92a. As a result, the upper member of the wing is forced in such a way that the elbow of the wing breaks and a tulip has formed at the upper member of the wing. The skin which is then still connecting the upper and lower members of the wing to one another can finally be cut through at the location of the recess 93c in the wing conveyor 93, so that the lower member can be removed together with the wing tip and the capsule.

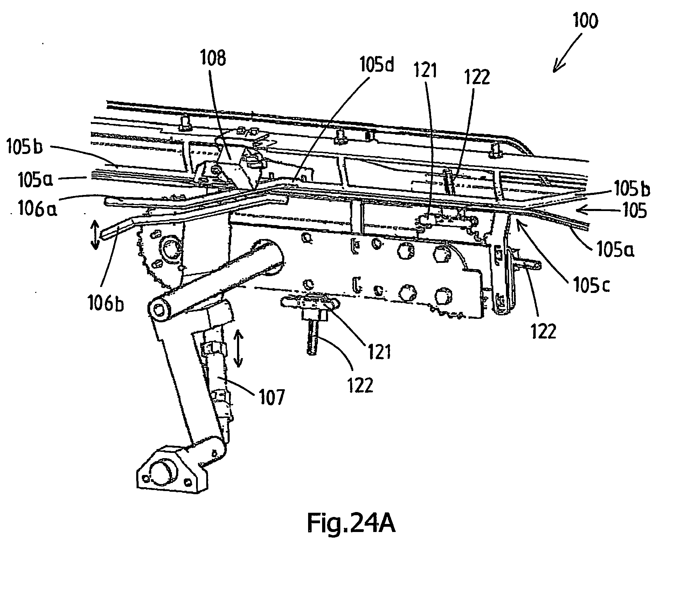

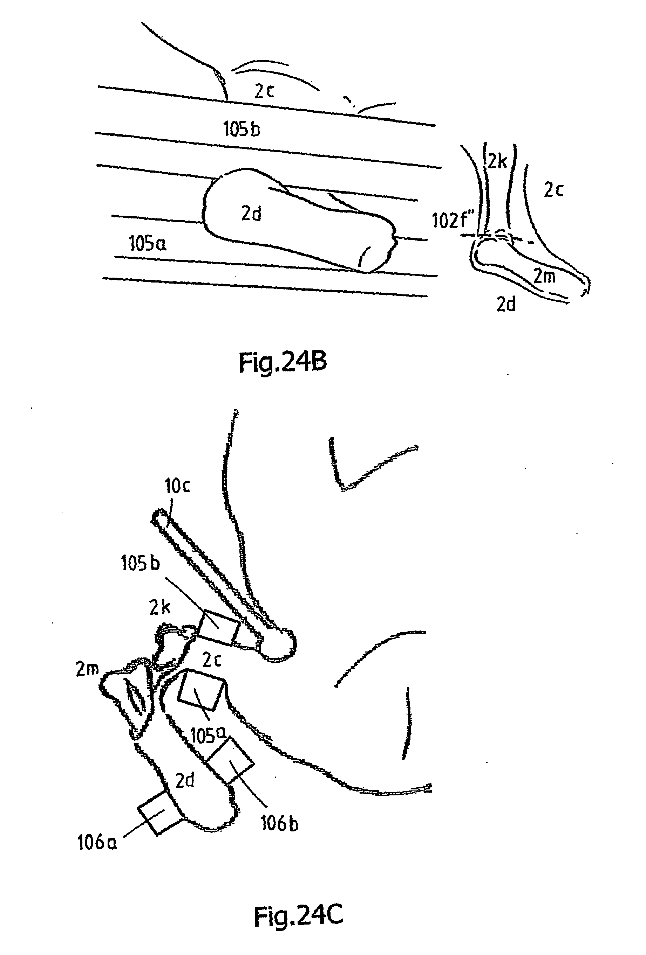

Fig. 24a shows a sixth embodiment of a wing processing station 100 according to the invention. Some details have been omitted for the sake of clarity. This wing processing station 100, like the wing processing station 1 shown in Fig. 2, comprises conveyor means 110 for the lower member of the wing (visible in Fig. 24c but omitted in Fig. 24a), and a conveyor guide fitted with chain links 121 and pins 122, which carries along the upper member and holds it in place (partially illustrated in Fig. 24a). The wing processing station 100 comprises fold-open guides 105 between which the upper member 2c of the wing 2b is guided. At the start of the device the wing 2b is received at the level of the upper member 2c between round rod-like guides 105a and 105b. This pair of guides is sufficiently far apart for the upper member 2c to be able to pass through them but not so far apart as to allow the elbow joint to pass through them. In the first instance, the guides run a small distance away from the carcass. The low tensile force which occurs ensures that the elbow joint always, irrespective of the natural variations in length of the wings of the poultry, bears against the pair of guides 105a and 105b. As a result, the upper member 2c is held away from the body 2a and the wing 2b is moved into a "spread-open" position. In the situation illustrated, the guide 105b is located above the guide 105a. When the elbow joint has been positioned in this manner, the round shape of the cross section of the guides merges into a square shape, approximately where indicated by arrow 105c. This can be seen in Fig. 24b. The square guides 105a and 105b have in this case been oriented in such a manner that a corner of the guide presses on the wing. As a result of the positioning of the joint and as a result of the relatively sharp edge of the guides, the capsule is damaged by an incision 102f" at the elbow joint. The use of a square guide 105a, 105b has the advantage over round guides as shown in the first embodiment from Figs. 2-9 that there is no longer any need for a blade to make an incision in the capsule. The edges of the guide are not sharp enough to damage the humerus bone 2k through the capsule. The result is that during the separation of the lower member from the upper member, the capsule will come off with the radius bone and the ulna bone (denoted jointly by 2m) of the lower member 2d, while the humerus bone 2k remains undamaged.

In the wing processing station 100 shown in Fig. 24, it is likewise preferable for the carcass part 2 to be supplied with its back at the front in the conveying direction and suspended by its legs 2k from a carrier (not shown). As long as the carcass 2a is being conveyed by means of the carrier, therefore, tension is being exerted on the carcass via the legs. The wings are advanced with the carcass. In the embodiment shown, after entry, the upper members of the wings are "trapped" by the conveyor guide, formed by chain links 121 and pins 122.

It is preferable for the conveyor guide 121, 122 to move a small amount more quickly than the conveyor line (not shown) which advances the carriers. The result of this is that the upper member 2c is picked up by the pins 122 and then "overtakes" the carcass 2a. The conveying of the entire carcass is transferred from the carrier by the pins 122. There is then no longer any tension acting on the carcass via the legs. Since the carrier is to some extent lagging behind the conveyor guide 121, 122, the carcass, at the moment at which it leaves the conveyor guide 121, 122, is completely stationary for a short time, without any tension on the carcass. It has been found that this is an optimum situation for breaking open the elbow joint and separating the upper and lower members from one another. When the lower member 2d is moved counter to the bending direction of the wing while there is no tension acting on the carcass, the upper member 2c will move with it in such a manner that the joint ultimately breaks open, as intended. If there is tension acting on the carcass, it is possible that the upper member 2c will be retained slightly by this tension or its movement limited in such a manner that the wing starts to "rotate" instead of "pivoting open". In practice, it has been found that it is quite a common scenario for the shoulder to come out of the socket without the elbow joint breaking open in situations in which the pin conveying 121, 122 is not synchronized with the conveying line of the carriers.

After the capsule of the upper member 2c has been damaged by the edges of guides 105a, 105b, the orientation of the square guides 105a and 105b for the upper member 2c changes in such a manner that the flat edges of the guides 105a, 105b come to bear against the upper member 2c. As a result, the humerus bone 2k, while the elbow is being broken open, is on the one hand supported by the surface of the guide 105a and on the other hand held in place by the surface of the guide 105b (as shown in Fig. 24c).

The lower member 2c is received, at arrow 105d, between two preferably square guides 106a and 106b. At 105d, the guide 106a of the lower member is attached to guide 105b of the upper member. These guides 106a and 106b are oriented in such a manner that the lower member 2d is enclosed between two flat sides of the guides 106a, 106b. The guides 106a, 106b move the lower member 2d downwards and inwards, i.e. counter to the natural bending direction of the joint, so that the latter breaks open. The ends of the radius and ulna bones 2m and the humerus bone 2k are in the process exposed, with the capsule remaining attached to the end of the radius and ulna bones 2m. The guides 106a, 106b are designed in such a way that only one wing passes through each time. The wing of the next carcass only reaches the start of the guides when its predecessor in the line has already left them. This prevents blockages and allows any lower member to be optimally received and bent in the module. The use of square guides has the advantage over round guides that the upper and lower members are supported over a larger area. This makes it easier to break open the elbow and there is less risk of bones breaking in the upper and/or lower members.

It can be seen from Fig. 24a that the lower guide 106a of the lower member 2d is resiliently mounted. The lower guide 106a can be moved towards the upper guide 106b by a pneumatic arm 107, so that the lower member 2d of the wing is securely clamped in place. The pneumatic arm 107 comes into action as soon as product detector 108 detects a product.

## Claims

1. Method for processing carcass parts of slaughtered poultry, in which a carcass part (2) comprises at least part of a body (2a) and at least part of a wing (2b), comprising bone, capsule in the vicinity of the elbow joint and meat that is naturally present,
- in which method use is made of a conveyor device with at least one carrier (31) and a conveyor path, the at least one carrier being displaceable in a conveying direction along the conveyor path and being designed to carry a carcass part,
- and in which method use is also made of a wing processing station (1) disposed along the conveyor path,
- in which method a carcass part is fed to the wing processing station with the aid of the conveyor device and is processed in the wing processing station while the carcass part is being carried by the carrier,
**characterized in that**
in the wing processing station, at least one bone belonging to the upper (2c) or lower member (2d) of the wing (2b) is exposed over part of its length in the vicinity of the elbow (2n), resulting in the preparation of a tulip, while the upper member (2c) of the wing is still attached to the body (2a).

2. Method according to claim 1, in which in the wing processing station the humerus bone (2k) of the upper member (2c) is exposed over part of its length in the vicinity of the elbow (2n).

3. Method according to claim 1, in which in the wing processing station the humerus bone (2k) of the upper member (2c) is exposed over part of its length in the vicinity of the elbow (2n) while the upper member (2c) is still attached to the body (2a), and in which the radius (2m') and ulna bones (2m") of the lower member (2d) are also exposed over part of their length in the vicinity of the elbow (2n), while the lower member (2d) is still attached to the upper member (2c).

4. Method according to claim 1 in which in the wind processing station (1) the radius (2m') and ulna bones (2m") of the lower member (2d) are exposed over part of their length in the vicinity of the elbow (2n) while the lower member (2d) is still attached to the upper member (2c).

5. Method according to one or more of the preceding claims, in which a bone (2k;2m';2m") belonging to a member (2c;2d) of the wing (2b) is exposed over part of its length in the vicinity of the elbow (2n) by removing the capsule (2x) from the bone in the vicinity of the elbow joint (2n).

6. Method according to one or more of the preceding claims, in which the uncovering of a bone belonging to a member of the wing (2b) over part of its length in the vicinity of the elbow (2n) is mechanized.

7. Method according to one or more of the preceding claims, in which in the wing processing station (1) the wing (2b) is spread away from the body (2a) using a spreading device (5).

8. Method according to claim 7, in which the spreading of the wing away from the body is carried out by guiding the wing along wing spreading guides (6;6') in the vicinity of the body.

9. Method according to one or more of the preceding claims, in which in the wing processing station (1) the skin between the lower and upper members is placed under tension with the aid of fold-open guides (5), after which an incision (2c') is made in the skin (2e).

10. Method according to claim 9, in which the incision is made by a blade (7b), for example a tiltable blade which is actuated by the passage of the wing itself.

11. Method according to one or more of the preceding claims, in which one or more incisions are made in the capsule in the vicinity of the elbow in the wing processing station, in such a manner that when the bones are then separated, the capsule of at least one bone comes off the bone.

12. Method according to claim 11, in which an incision is made on the outer side (2f) of the elbow (2n) without damaging the humerus, ulna and radius bones.

13. Method according to claim 12, in which the incision is made using an elongate blade (8a).

14. Method according to claim 12, in which the incision is made using a rotating blade (56a,56b).

15. Method according to one of claims 12, 13 and 14, in which the incision is made using a blade, a depth stop being provided, for example a (plastic) disc or plate (7a) which is mounted on the blade and prevents the blade from being able to penetrate too deep into the joint.

16. Method according to one or more of the preceding claims, in which at the wing processing station there are forcing means (5a,5b) which separate the humerus bone from the radius and ulna bones, in such a manner that the elbow breaks, whereas the humerus, radius and ulna bones themselves do not break.

17. Method according to claim 16, in which the forcing means comprise forced guidance means past which the lower member of the wing advances, which forced guidance means form a separation pattern (9a) which is such that the humerus bone is separated from the radius and ulna bones.

18. Method according to claim 16, in which the forcing means comprise a rotating wheel with projections (10c), for example teeth or pins, optionally surrounded by a ring, between which the upper member of the wing is taken hold of.

19. Method according to one of claim 16-18, in which the forcing means comprise conveyor means (10), such as for example a rotating chain with projections (10c), for example comprise pins, in order to help the conveyor device for the slaughtered poultry to convey the wing.

20. Method according to one or more of the preceding claims 16-19, in which the forcing means, after the separation of the bones, force at least one of the members, in such a manner that at least one bone belonging to a member of the wing is exposed over part of its length in the vicinity of the elbow.

21. Method according to claim 20, in which the forcing means comprise forced guidance means (57) past which the lower member of the wing advances, which guidance means form a first turn-up pattern which is such that the end of the lower member in the vicinity of the elbow is pressed towards the body, so that at least the meat at that end of the humerus bone which is remote from the body comes off the bone and is turned up.

22. Method according to claim 20 or 21, in which the forcing means comprise forced guidance means (55;57) past which the lower member of the wing advances, which guidance means form a second turn-up pattern which is such that the lower member is moved as close as possible past the upper member in the direction of the body, so that at least the meat on the lower member in the vicinity of the elbow comes off the bone and is turned up.

23. Method according to one or more of the preceding claims 16-22, in which the wing processing station comprises capsule guidance means which engage around the capsule in the vicinity of the elbow joint in order to hold the capsule in place during the breaking operation.

24. Method according to one or more of the preceding claims, in which after the separation of the bones at least one bone belonging to a member of the wing is exposed over part of its length in the vicinity of the elbow by the member being guided past one or more scraper members, (78a;78b) for example scraper plates.

25. Method according to one or more of the preceding claims, in which in the wing processing station the lower member and the upper member are separated from one another in a member separation device (79) while the upper member is attached to the body.

26. Method according to claim 25, in which the separation is carried out by making an incision, with the result that the lower member with the capsule in the vicinity of the elbow attached to it is separated from the upper member.

27. Method according to claim 25, in which the separation is carried out by making two incisions next to one another, with the
result that the lower member is separated from the capsule in the vicinity of the elbow and the capsule in the vicinity of the elbow is separated from the upper member.

28. Method according to one or more of the preceding claims, in which finally the upper member is removed from the body.

29. Method according to one or more of the preceding claims, in which the body (2a) of a carcass part also comprises legs (2k), with the securing of a carcass part (2) to a carrier of the conveyor device being effected by securing the legs to the carrier (31).

30. Method according to one or more of the preceding claims, in which use is made of a carrier (31) with carrier part (31a) which projects into the body, for example a conical carrier part (31a) which is designed to project into the body, which is open on one side.

31. Device for processing carcass parts of slaughtered poultry, in which a carcass part (2) comprises at least part of a body (2a) and at least part of a wing (2b), comprising bone, capsule in the vicinity of the elbow joint and meat that is naturally present, which device comprises:
• a conveyor device comprising a conveyor path (37) and at least one carrier (31;33) which is designed to carry a carcass part,
• along which conveyor path the at least one carrier can be displaced in a conveying direction (32;34),
• a wing processing station (1) which is disposed along the conveyor path and to which a carcass part can be fed by the conveyor device, in which wing processing station the carcass part is processed while the carcass part is being carried by the carrier,
**characterized in that**
the wing processing station is designed in such a manner that at least one bone belonging to the upper (2c) or lower (2d) member of the wing (2b) is exposed over part of its length in the vicinity of the elbow (2n), resulting in the preparation of a tulip, while the upper member (2c) is still attached to the body (2a).

32. Device according to claim 31, in which the wing processing station is also provided with a spreading device (5) in which the wing
can be spread away from the body.

33. Device according to claim 32, in which the spreading device is provided with wing spreading guides (5a,5b), along which the wing of the bird can be guided in the vicinity of the body.

34. Device according to one or more of the preceding claims 31-33, in which the wing processing station is provided with fold-open guides (5), with the aid of which the skin between the upper and lower members can be placed under tension, and is also provided with first cutting means (7) for making an incision in this skin.

35. Device according to claim 34, in which the first cutting means is a tiltable blade (7b) which can if appropriate be actuated by the wing itself.

36. Device according to one or more of the preceding claims 31-35, in which the wing processing station comprises one or more second cutting means (8) which can form one or more incisions in the capsule in the vicinity of the elbow without damaging the humerus, ulna or radius bone, in such a manner that when the bones are then separated, the capsule of at least one bone comes off the bone.

37. Device according to claim 36, in which the second cutting means comprise an elongate blade (8a).

38. Device according to claim 36 or 37, in which the second cutting means comprise a rotating blade (56a,56b).

39. Device according to claim 36-38, in which the second cutting means is provided with a depth stop, for example a (plastic) disc or plate (7a), which prevents the blade from being able to penetrate too deep into the joint.

40. Device according to one or more of the preceding claims 31-39, in which the wing processing station (1) is provided with forcing means (5a,5b) which separate the humerus bone from the radius and ulna, in such a manner that the elbow breaks, whereas the radius, humerus and ulna bones themselves do not break.

41. Device according to claim 40, in which the forcing means comprise forced guidance means past which the lower member of the wing can advance, which forced guidance means form a separation pattern (9a) which is such that the humerus bone can be separated from the radius and ulna bones.

42. Device according to claim 40 or 41, in which the forcing means comprise a rotating wheel with teeth or pins (10c), optionally surrounded by a ring, between which the lower member of the wing can be taken hold of.

43. Device according to one or more of claims 40-42, in which the forcing means comprise conveyor means (10), such as a belt or chain with pins in order to help the conveyor device for the slaughtered poultry to convey the wing.

44. Device according to one or more of claims 31-43, in which the forcing means comprise forced guidance means past which the lower member of the wing advances, which guidance means form a first turn-up pattern which is such that the end of the lower member, in the vicinity of the elbow, is pressed towards the body, so that at least the meat at that end of the humerus bone which is remote from the body comes off the bone and is turned up.

45. Device according to one or more of claims 31-44, in which the forcing means comprise forced guidance means (56;57) past which the lower member of the wing advances, which guidance means form a second turn-up pattern which is such that the lower member is moved as close as possible past the upper member in the direction of the body, so that at least the meat on the lower member in the vicinity of the elbow comes off the bone and is turned up.

46. Device according to one or more of claims 31-45, in which capsule guidance means are arranged around the capsule in the vicinity of the elbow joint in order to hold the capsule in place during the breaking operation.

47. Device according to one or more of claims 31-46, comprising one or more scraper plates past (78a,78b) which a member of the wing can be guided after the separation of the bones, with the result that at least one bone belonging to a member of the wing is exposed over part of its length in the vicinity of the elbow.

48. Device according to one or more of claims 31-47, also provided with a member separation device (79) in which the lower member is separated from the upper member while the upper member is attached to the body.

49. Device according to claim 48, in which the member separation device is provided with third cutting means which can make an incision, with the result that the lower member with the capsule in the vicinity of the elbow attached to it can be separated from the upper member.

50. Device according to claim 48 or 49, in which the member separation device is provided with fourth cutting means which can make an incision, with the result that the lower member can be separated from the capsule in the vicinity of the elbow.

51. Device according to one or more of the preceding claims 31-48, also provided with fifth cutting means for removing the upper member from the body.

## Patentansprüche

1. Verfahren zum Verarbeiten von Karkassenteilen von Schlachtgeflügel, bei dem ein Karkassenteil (2) mindestens einen Teil eines Körpers (2a) und mindestens einen Teil eines Flügels (2b) umfasst, der Knochen, eine Kapsel in der Nähe des Ellbogengelenks und natürlich vorhandenes Fleisch aufweist,
wobei in dem Verfahren eine Fördervorrichtung mit mindestens einem Träger (31) und einem Förderweg verwendet wird, der mindestens eine Träger in Förderrichtung entlang des Förderweges verschiebbar und dafür ausgelegt ist, ein Karkassenteil zu befördern,
und wobei in dem Verfahren auch eine Flügelverarbeitungsstation (1) genutzt wird, die entlang des Förderwegs angeordnet ist,
wobei in dem Verfahren ein Karkassenteil mithilfe der Fördervorrichtung in die Flügelverarbeitungsstation transportiert und in der Flügelverarbeitungsstation verarbeitet wird, während das Karkassenteil von dem Träger befördert wird,
**dadurch gekennzeichnet, dass**
in der Flügelverarbeitungsstation mindestens ein Knochen, der zu dem oberen (2c) oder unteren Glied (2d) des Flügels (2b) gehört, auf einem Teil seiner Länge in der Nähe des Ellbogens (2n) freigelegt wird, so dass eine Tulpe gebildet wird, während das obere Glied (2c) des Flügels immer noch am Körper (2a) hängt.

2. Verfahren nach Anspruch 1, bei dem in der Flügelverarbeitungsstation der Oberarmknochen (2k) des oberen Glieds (2c) auf einem Teil seiner Länge in der Nähe des Ellbogens (2n) freigelegt wird.

3. Verfahren nach Anspruch 1, bei dem in der Flügelverarbeitungsstation der Oberarmknochen (2k) des oberen Glieds (2c) auf einem Teil seiner Länge in der Nähe des Ellbogens (2n) freigelegt wird, während das obere Glied (2c) immer noch am Körper (2a) hängt, und in dem der Speichen- (2m') und Ellenknochen (2m") des unteren Glieds (2d) ebenfalls auf einem Teil ihrer Länge in der Nähe des Ellbogens (2n) freigelegt werden, während das untere Glied (2d) immer noch am oberen Glied (2c) hängt.

4. Verfahren nach Anspruch 1, bei dem in der Flügelverarbeitungsstation (1) der Speichen- (2m') und Ellenknochen (2m") des unteren Glieds (2d) auf einem Teil ihrer Länge in der Nähe des Ellbogens (2n) freigelegt werden, während das untere Glied (2d) immer noch am oberen Glied (2c) hängt.

5. Verfahren nach einem oder mehreren der vorhergehenden Ansprüche, bei dem ein Knochen (2k, 2m', 2m"), der zu einem Glied (2c, 2d) des Flügels (2b) gehört, auf einem Teil seiner Länge in der Nähe des Ellbogens (2n) durch Entfernen der Kapsel (2x) vom Knochen in der Nähe des Ellbogengelenks (2n) freigelegt wird.

6. Verfahren nach einem oder mehreren der vorhergehenden Ansprüche, bei dem das Freilegen eines Knochens, der zu einem Glied des Flügels (2b) gehört, auf einem Teil seiner Länge in der Nähe des Ellbogens (2n) mechanisch geschieht.

7. Verfahren nach einem oder mehreren der vorhergehenden Ansprüche, bei dem in der Flügelverarbeitungsstation (1) der Flügel (2b) unter Verwendung einer Spreizvorrichtung (5) vom Körper (2a) abgespreizt wird.

8. Verfahren nach Anspruch 7, bei dem das Abspreizen des Flügels vom Körper ausgeführt wird, indem der Flügel entlang Flügel-Abspreizführungen (6; 6') in der Nähe des Körpers geführt wird.

9. Verfahren nach einem oder mehreren der vorhergehenden Ansprüche, bei dem in der Flügelverarbeitungsstation (1) die Haut zwischen dem oberen und unteren Glied mithilfe von Auffalt-Führungen (5) unter Spannung gesetzt wird, so dass anschließend ein Einschnitt (2e') in die Haut (2e) gemacht werden kann.

10. Verfahren nach Anspruch 9, bei dem der Einschnitt durch ein Schneidemesser (7b) erfolgt, wie beispielsweise durch eine neigbare Schneide, die durch den Durchgang des Flügels selbst betätigt wird.

11. Verfahren nach einem oder mehreren der vorhergehenden Ansprüche, bei dem in der Flügelverarbeitungsstation ein oder mehrere Einschnitte in die Kapsel in der Nähe des Ellbogens gemacht werden, so dass die Kapsel von mindestens einem Knochen entfernt wird, wenn die Knochen anschließend getrennt werden.

12. Verfahren nach Anspruch 11, bei dem ein Einschnitt an der Außenseite (2f) des Ellbogens (2n) gemacht wird, ohne den Oberarm-, Ellen- und Speichenknochen zu beschädigen.

13. Verfahren nach Anspruch 12, bei dem der Einschnitt unter Verwendung einer länglichen Schneide (8a) erfolgt.

14. Verfahren nach Anspruch 12, bei dem der Einschnitt unter Verwendung einer rotierenden Schneide (56a, 56b) erfolgt.

15. Verfahren nach einem der Ansprüche 12, 13 und 14, bei dem der Einschnitt unter Verwendung einer Schneide erfolgt, wobei ein Tiefenanschlag vorgesehen ist, wie beispielsweise eine (Kunststoff-) Scheibe oder Platte (7a), der an der Schneide montiert ist und verhindert, dass die Schneide zu tief in das Gelenk eindringen kann.

16. Verfahren nach einem oder mehreren der vorhergehenden Ansprüche, bei dem an der Flügelverarbeitungsstation Kraftaufbringungseinrichtungen (5a, 5b) ausgebildet sind, die den Oberarmknochen vom Speichen- und Ellenknochen solcherart trennen, dass der Ellbogen bricht, wohingegen der Oberarm-, Speichen- und Ellenknochen selbst nicht brechen.

17. Verfahren nach Anspruch 16, bei dem die Kraftaufbringungseinrichtungen kraftbetätigte Führungseinrichtungen umfassen, an welchen das untere Glied des Flügels vorbeitransportiert wird, wobei die kraftbetätigten Führungseinrichtungen ein so geartetes Trennmuster (9a) bewirken, dass der Oberarmknochen vom Speichen- und Ellenknochen getrennt wird.

18. Verfahren nach Anspruch 16, bei dem die Kraftaufbringungseinrichtungen ein rotierendes Rad mit Vorsprüngen (10c) wie beispielsweise Zähnen oder Stiften umfassen, die optional von einem Ring umgeben sind, zwischen welchen das obere Glied des Flügels erfasst wird.

19. Verfahren nach einem der Ansprüche 16-18, bei dem die Kraftaufbringungseinrichtungen Fördermittel (10) umfassen, wie beispielsweise eine rotierende Kette mit Vorsprüngen (10c) wie zum Beispiel Stiften, um die Fördervorrichtung für das Schlachtgeflügel bei der Beförderung des Flügels zu unterstützen.

20. Verfahren nach einem oder mehreren der vorhergehenden Ansprüche 16-19, bei dem die Kraftaufbringungseinrichtungen nach Trennung der Knochen auf mindestens eines der Glieder solcherart Kraft aufbringen, dass mindestens ein Knochen, der zu einem Glied des Flügels gehört, auf einem Teil seiner Länge in der Nähe des Ellbogens freigelegt wird.

21. Verfahren nach Anspruch 20, bei dem die Kraftaufbringungseinrichtungen kraftbetätigte Führungseinrichtungen (57) umfassen, an welchen das untere Glied des Flügels vorbeitransportiert wird, wobei die Führungseinrichtungen ein erstes so geartetes Umbiegemuster formen, dass das Ende des unteren Glieds in der Nähe des Ellbogens in Richtung des Körpers gepresst wird, so dass mindestens das Fleisch an dem Ende des Oberarmknochens, das vom Körper entfernt ist, sich vom Knochen löst und nach oben geschoben wird.

22. Verfahren nach Anspruch 20 oder 21, bei dem die Kraftaufbringungseinrichtungen kraftbetätigte Führungseinrichtungen (55; 57) umfassen, an welchen das untere Glied des Flügels vorbeitransportiert wird, wobei die Führungseinrichtungen ein zweites so geartetes Umbiegemuster formen, dass das untere Glied so nah wie möglich an dem oberen Glied vorbei in Richtung des Körpers bewegt wird, so dass mindestens das Fleisch an dem unteren Glied in der Nähe des Ellbogens sich vom Knochen löst und nach oben geschoben wird.

23. Verfahren nach einem oder mehreren der vorhergehenden Ansprüche 16-22, bei welchem die Flügelverarbeitungsstation Kapselführungseinrichtungen umfasst, die um die Kapsel in der Nähe des Ellbogengelenks herum in Eingriff stehen, um die Kapsel während des Brechvorgangs an ihrem Platz zu halten.

24. Verfahren nach einem oder mehreren der vorhergehenden Ansprüche, bei dem nach Trennung der Knochen mindestens ein Knochen, der zu einem Glied des Flügels gehört, auf einem Teil seiner Länge in der Nähe des Ellbogens freigelegt wird, indem das Glied an einem oder mehreren Schabelementen (78a, 78b) wie beispielsweise Schabplatten vorbeigeführt wird.

25. Verfahren nach einem oder mehreren der vorhergehenden Ansprüchen, bei dem in der Flügelverarbeitungsstation das untere Glied und das obere Glied in einer Gliedertrennvorrichtung (79) voneinander getrennt werden, während das obere Glied noch am Körper hängt.

26. Verfahren nach Anspruch 25, bei dem die Trennung durch Vornehmen eines Einschnitts mit dem Ergebnis ausgeführt wird, dass das untere Glied mit der in der Nähe des Ellbogens verbundenen Kapsel von dem oberen Glied getrennt wird.

27. Verfahren nach Anspruch 25, bei die Trennung durch Vornehmen von zwei Einschnitten nebeneinander erfolgt, mit dem Ergebnis, dass das untere Glied von der Kapsel in der Nähe des Ellbogens getrennt wird und die Kapsel in der Nähe des Ellbogens von dem oberen Glied getrennt wird.

28. Verfahren nach einem oder mehreren der vorhergehenden Ansprüche, bei dem schließlich das obere Glied vom Körper entfernt wird.

29. Verfahren nach einem oder mehreren der vorhergehenden Ansprüche, bei dem der Körper (2a) eines Karkassenteils auch Beine (2k) umfasst, wobei das Sichern eines Karkassenteils (2) an einem Träger der Fördervorrichtung durch Sichern der Beine an dem Träger (31) erfolgt.

30. Verfahren nach einem oder mehreren der vorhergehenden Ansprüche, bei dem ein Träger (31) mit einem Trägerteil (31 a) eingesetzt wird, das in den Körper hineinragt, beispielsweise ein konisches Trägerteil (31 a), das dazu konstruiert wurde, in den Körper hineinzuragen, der an einer Seite offen ist.

31. Vorrichtung zum Verarbeiten von Karkassenteilen von Schlachtgeflügel, bei dem ein Karkassenteil (2) mindestens einen Teil eines Körpers (2a) und mindestens einen Teil eines Flügels (2b) umfasst, der Knochen, eine Kapsel in der Nähe des Ellbogengelenks und natürlich vorhandenes Fleisch aufweist, wobei die Vorrichtung umfasst:
• eine Fördervorrichtung mit einem Förderweg (37) und mindestens einem Träger (31, 33), der dazu konstruiert ist, ein Karkassenteil zu tragen,
• wobei entlang des Förderwegs der mindestens eine Träger in Förderrichtung (32, 34) verschoben werden kann,
• eine Flügelverarbeitungsstation (1), die entlang dem Förderweg angeordnet ist und zu der mithilfe der Fördervorrichtung ein Karkassenteil transportiert werden kann, wobei das Karkassenteil in der Flügelverarbeitungsstation verarbeitet wird, während das Karkassenteil von dem Träger befördert wird, **dadurch gekennzeichnet, dass**
die Flügelverarbeitungsstation so konstruiert ist, dass mindestens ein Knochen, der zu dem oberen (2c) oder unteren Glied (2d) des Flügels (2b) gehört, auf einem Teil seiner Länge in der Nähe des Ellbogens (2n) freigelegt wird, so dass eine Tulpe gebildet wird, während das obere Glied (2c) des Flügels immer noch am Körper (2a) hängt.

32. Vorrichtung nach Anspruch 31, bei der die Flügelverarbeitungsstation auch mit einer Spreizvorrichtung (5) versehen ist, in der der Flügel vom Körper abgespreizt werden kann.

33. Vorrichtung nach Anspruch 32, bei der die Spreizvorrichtung mit Flügel-Abspreizführungen (5a; 5b) versehen ist, entlang derer der Flügel des Vogel in der Nähe des Körpers geführt werden kann.

34. Vorrichtung nach einem oder mehreren der vorhergehenden Ansprüche 31-33, bei der die Flügelverarbeitungsstation mit Auffalt-Führungen (5) versehen ist, mithilfe derer die Haut zwischen dem oberen und unteren Glied unter Spannung gesetzt werden kann, und außerdem mit einer ersten Schneideinrichtung (7) versehen ist, um einen Einschnitt in diese Haut zu machen.

35. Vorrichtung nach Anspruch 34, bei der die erste Schneideinrichtung eine neigbare Schneide (7b) ist, die gegebenenfalls von dem Flügel selbst betätigt werden kann.

36. Vorrichtung nach einem oder mehreren der vorhergehenden Ansprüche 31-35, bei der die Flügelverarbeitungsstation eine oder mehrere zweite Schneideinrichtungen (8) umfasst, die einen oder mehrere Einschnitt in die Kapsel in der Nähe des Ellbogens vornehmen können, ohne den Oberarm-, Ellen- oder Speichenknochen zu beschädigen, so dass die Kapsel von mindestens einem Knochen entfernt wird, wenn die Knochen anschließend getrennt werden.

37. Vorrichtung nach Anspruch 36, bei der die zweite Schneideinrichtung eine längliche Schneide (8a) aufweist.

38. Vorrichtung nach Anspruch 36 oder 37, bei der die zweite Schneideinrichtung eine rotierende Schneide (56a; 56b) aufweist.

39. Vorrichtung nach Anspruch 36-38, bei der die zweite Schneideinrichtung mit einem Tiefenanschlag wie beispielsweise einer (Kunststoff-) Scheibe oder Platte (7a) versehen ist, die verhindert, dass die Schneide zu tief in das Gelenk eindringen kann.

40. Vorrichtung nach einem oder mehreren der vorhergehenden Ansprüche 31-39, bei der die Flügelverarbeitungsstation (1) mit Kraftaufbringungseinrichtungen (5a; 5b) versehen ist, die den Oberarmknochen vom Speichen- und Ellenknochen solcherart trennen, dass der Ellbogen bricht, wohingegen der Oberarm-, Speichen- und Ellenknochen selbst nicht brechen.

41. Vorrichtung nach Anspruch 40, bei der die Kraftaufbringungseinrichtungen kraftbetätigte Führungseinrichtungen umfassen, an welchen das untere Glied des Flügels vorbeitransportiert werden kann, wobei die kraftbetätigten Führungseinrichtungen ein so geartetes Trennmuster (9a) bewirken, dass der Oberarmknochen vom Speichen- und Ellenknochen getrennt wird.

42. Vorrichtung nach Anspruch 40 oder 41, bei der die Kraftaufbringungseinrichtungen ein rotierendes Rad mit Zähnen oder Stiften (10c) umfassen, die optional von einem Ring umgeben sind, zwischen welchen das obere Glied des Flügels erfasst wird.

43. Vorrichtung nach einem oder mehreren der Ansprüche 40-42, bei der die Kraftaufbringungseinrichtungen Fördermittel (10) umfassen, wie beispielsweise einen Riemen oder eine Kette mit Stiften, um die Fördervorrichtung für das Schlachtgeflügel bei der Beförderung des Flügels zu unterstützen.

44. Vorrichtung nach einem oder mehreren der Ansprüche 31-43, bei der die Kraftaufbringungseinrichtungen kraftbetätigte Führungseinrichtungen umfassen, an welchen das untere Glied des Flügels vorbeitransportiert wird, wobei die Führungseinrichtungen ein erstes so geartetes Umbiegemuster formen, dass das Ende des unteren Glieds in der Nähe des Ellbogens in Richtung des Körpers gepresst wird, so dass mindestens das Fleisch an dem Ende des Oberarmknochens, das vom Körper entfernt ist, sich vom Knochen löst und nach oben geschoben wird.

45. Vorrichtung nach einem oder mehreren der Ansprüche 31-44, bei dem die Kraftaufbringungseinrichtungen kraftbetätigte Führungseinrichtungen (56; 57) umfassen, an welchen das untere Glied des Flügels vorbeitransportiert wird, wobei die Führungseinrichtungen ein zweites so geartetes Umbiegemuster formen, dass das untere Glied so nah wie möglich an dem oberen Glied vorbei in Richtung des Körpers bewegt wird, so dass mindestens das Fleisch an dem unteren Glied in der Nähe des Ellbogens sich vom Knochen löst und nach oben geschoben wird.

46. Vorrichtung nach einem oder mehreren der Ansprüche 31-45, bei welchem die Kapselführungseinrichtungen um die Kapsel in der Nähe des Ellbogengelenks herum angeordnet sind, um die Kapsel während des Brechvorgangs an ihrem Platz zu halten.

47. Vorrichtung nach einem oder mehreren der Ansprüche 31-46, die eine oder mehrere Schabplatten (78a, 78b) aufweist, an welchen ein Glied des Flügels nach Trennung der Knochen vorbeigeführt werden kann, mit dem Ergebnis, dass mindestens ein Knochen, der zu einem Glied des Flügels gehört, auf einem Teil seiner Länge in der Nähe des Ellbogens freigelegt wird.

48. Vorrichtung nach einem oder mehreren der Ansprüche 31-47, die außerdem mit einer Gliedertrennvorrichtung (79) versehen ist, in der das untere Glied von dem oberen Glied getrennt wird, während das obere Glied noch am Körper hängt.

49. Vorrichtung nach Anspruch 48, bei der die Gliedertrennvorrichtung mit einer dritten Schneidvorrichtung versehen ist, die einen Einschnitt mit dem Ergebnis vornehmen kann, dass das untere Glied mit der in der Nähe des Ellbogens verbundenen Kapsel von dem oberen Glied getrennt wird.

50. Vorrichtung nach Anspruch 48 oder 49, bei der die Gliedertrennvorrichtung mit einer vierten Schneidvorrichtung versehen ist, die einen Einschnitt mit dem Ergebnis vornehmen kann, dass das untere Glied von der Kapsel in der Nähe des Ellbogens getrennt werden kann.

51. Vorrichtung nach einem oder mehreren der vorhergehenden Ansprüche 31-48, die außerdem mit einer fünften Schneideinrichtung versehen ist, um das oberer Glied vom Körper zu entfernen.

## Revendications

1. Procédé de traitement de parties formant carcasse d'une volaille abattue, dans lequel une partie formant carcasse (2) comprend au moins une partie d'un corps (2a) et au moins une partie d'une aile (2b), comprenant de l'os, une capsule au voisinage du coude et de la chair qui est naturellement présente,
- procédé dans lequel il est utilisé un dispositif de transport comportant au moins un transporteur (31) et un chemin de transport, l'au moins un transporteur étant déplaçable dans une direction de transport le long du chemin de transport et étant prévu pour transporter une partie formant carcasse,
- et procédé dans lequel il est utilisé également une station de traitement d'aile (1) placée le long du chemin de transport,
- procédé dans lequel une partie formant carcasse est introduite dans la station de traitement d'aile à l'aide du dispositif de transport et est traitée dans la station de traitement d'aile pendant que la partie formant carcasse est transportée par le transporteur, **caractérisé en ce que**
dans la station de traitement d'aile, au moins un os appartenant à l'élément supérieur (2c) ou l'élément inférieur (2d) de l'aile (2b) est exposé sur une partie de sa longueur au voisinage du coude (2n), avec pour résultat la préparation d'une tulipe, alors que l'élément supérieur (2c) de l'aile est encore attachée au corps (2a).

2. Procédé selon la revendication 1, dans lequel, dans la station de traitement d'aile, l'os humérus (2k) de l'élément supérieur (2c) est exposé sur une partie de sa longueur au voisinage du coude (2n).

3. Procédé selon la revendication 1, dans lequel, dans la station de traitement d'aile, l'os humérus (2k) de l'élément supérieur (2c) est exposé sur une partie de sa longueur au voisinage du coude (2n) alors que l'élément supérieur (2c) est encore attaché au corps (2a), et dans lequel les os radius (2m') et cubitus (2m") de l'élément inférieur (2d) sont également exposés sur une partie de leur longueur au voisinage du coude (2n), alors que l'élément inférieur (2d) est encore attaché à l'élément supérieur (2c).

4. Procédé selon la revendication 1, dans lequel, dans la station de traitement d'aile (1), les os radius (2m') et cubitus (2m") de l'élément inférieur (2d) sont exposés sur une partie de leur longueur au voisinage du coude (2n) alors que l'élément inférieur (2d) est encore attaché à l'élément supérieur (2c).

5. Procédé selon l'une ou plusieurs des revendications précédentes, dans lequel un os (2k; 2m' ; 2m") appartenant à un élément (22c; 2d) de l'aile est exposé sur une partie de sa longueur au voisinage du coude (2n) en retirant la capsule (2x) de l'os au voisinage de l'articulation du coude (2n).

6. Procédé selon l'une ou plusieurs des revendications précédentes, dans lequel la mise à nu d'un os appartenant à un élément de l'aile (2b) sur une partie de sa longueur au voisinage du coude (2n) est mécanisée.

7. Procédé selon l'une ou plusieurs des revendications précédentes, dans lequel, dans la station de traitement d'aile (1), l'aile (2b) est déployée du corps (2a) en utilisant un dispositif de déploiement (5).

8. Procédé selon la revendication 7, dans lequel le déploiement de l'aile du corps est effectué en guidant l'aile le long de guides de déploiement d'aile (6 ; 6') au voisinage du corps.

9. Procédé selon l'une ou plusieurs des revendications précédentes, dans lequel, dans la station de traitement d'aile (1), la peau située entre les éléments inférieur et supérieur est mise sous tension à l'aide de deux guides d'ouverture et de pliage (5), après quoi une incision (2e') est effectuée dans la peau (2e).

10. Procédé selon la revendication 9, dans lequel l'incision est effectuée par une lame (7b), par exemple une lame inclinable qui est actionnée par le passage de l'aide elle-même.

11. Procédé selon l'une ou plusieurs des revendications précédentes, dans lequel une ou plusieurs incisions sont effectuées dans la capsule au voisinage du coude dans la station de traitement d'aile, de telle manière que, lorsque les os sont ensuite séparées, la capsule d'au moins un os se détache de l'os.

12. Procédé selon la revendication 11, dans lequel une incision est effectuée du côté extérieur (2f) du coude (2n) sans endommager les os humérus, cubitus et radius.

13. Procédé selon la revendication 12, dans lequel l'incision est effectuée en utilisant une lame allongée (8a).

14. Procédé selon la revendication 12, dans lequel l'incision est effectuée en utilisant une lame rotative (56a, 56b).

15. Procédé selon l'une des revendications 12, 13 et 14, dans lequel l'incision est effectuée en utilisant une lame, une butée de profondeur étant prévue, par exemple un disque ou une plaque (7a) (en matière plastique) qui est monté(e) sur la lame et qui empêche la lame de pouvoir pénétrer trop profondément dans l'articulation.

16. Procédé selon l'une ou plusieurs des revendications précédentes, dans lequel, à la station de traitement d'aile, il est prévu des moyens de forçage (5a, 5b) qui séparent l'os humérus des os radius et cubitus, de manière à ce que le coude se brise, alors que les os humérus, radius et cubitus eux-mêmes ne se brisent pas.

17. Procédé selon la revendication 16, dans lequel les moyens de forçage comprennent des moyens de guidage forcé devant lesquels avance l'élément inférieur de l'aile, lesquels moyens de guidage forcé forment un motif de séparation (9a) qui est tel que l'os humérus est séparé des os radius et cubitus.

18. Procédé selon la revendication 16, dans lequel les moyens de forçage comprennent une roue rotative dotée de saillies (106), par exemple des dents ou des picots, entourées en option par une couronne, entre lesquels l'élément supérieur de l'aile est maintenu.

19. Procédé selon l'une des revendications 16 à 18, dans lequel les moyens de forçage comprennent des moyens de transport (10), tels que par exemple une chaîne rotative dotée de saillies (106), par exemple des picots, afin d'aider le dispositif de transport de la volaille abattue à transporter l'aile.

20. Procédé selon l'une ou plusieurs des revendications précédentes 16 à 19, dans lequel les moyens de forçage, après la séparation des os, forcent au moins un des éléments, de telle manière qu'au moins un os appartenant à un élément de l'aile est exposé sur une partie de sa longueur au voisinage du coude.

21. Procédé selon la revendication 20, dans lequel les moyens de forçage comprennent des moyens de guidage forcé (57) devant lesquels avance l'élément inférieur de l'aile, lesquels moyens de guidage forment un premier motif de relevage qui est tel que l'extrémité de l'élément inférieur au voisinage du coude est pressée en direction du corps, de sorte que au moins la chair à cette extrémité de l'os humérus, qui est éloignée du corps, se détache de l'os et est relevée.

22. Procédé selon la revendication 20 ou 21, dans lequel les moyens de forçage comprennent des moyens de guidage forcé (55 ; 57) devant lesquels avance l'élément inférieur de l'aile, lesquels moyens de guidage forment un second motif de relevage qui est tel que l'élément inférieur est déplacé aussi près que possible devant l'élément supérieur dans la direction du corps, de sorte que au moins la chair sur l'élément inférieur au voisinage du coude se détache de l'os et est relevé.

23. Procédé selon l'une ou plusieurs des revendications précédentes 16 à 22, dans lequel la station de traitement d'aile comprend des moyens de guidage de capsule qui s'engagent autour de la capsule au voisinage de l'articulation du coude afin de maintenir la capsule en place pendant l'opération de brisure.

24. Procédé selon l'une ou plusieurs des revendications précédentes, dans lequel, après la séparation des os, au moins un os appartenant à un élément de l'aile est exposé sur une partie de sa longueur au voisinage du coude par l'élément guidé devant un ou plusieurs éléments de grattage (78a ; 78b), par exemple des plaques de grattage.

25. Procédé selon l'une ou plusieurs des revendications précédentes, dans lequel, dans la station de traitement d'aile, l'élément inférieur et l'élément supérieur sont séparés l'un de l'autre dans un dispositif de séparation d'éléments (79) alors que l'élément supérieur est fixé au corps.

26. Procédé selon la revendication 25, dans lequel la séparation est réalisée en effectuant une incision, avec pour résultat que l'élément inférieur doté de la capsule au voisinage du coude fixé à celle-ci est séparé de l'élément supérieur.

27. Procédé selon la revendication 25, dans lequel la séparation est réalisée en effectuant deux incisions proches l'une de l'autre, avec pour résultat que l'élément inférieur est séparé de la capsule au voisinage du coude et la capsule au voisinage du coude est séparée de l'élément supérieur.

28. Procédé selon l'une ou plusieurs des revendications précédentes, dans lequel l'élément supérieur est finalement retiré du corps.

29. Procédé selon l'une ou plusieurs des revendications précédentes, dans lequel le corps (2a) d'une partie formant carcasse comprend également des pattes (2k), la fixation d'une partie formant carcasse (2) à un transporteur du dispositif de transport étant effectuée en fixant les pattes au transporteur (31).

30. Procédé selon l'une ou plusieurs des revendications précédentes, dans lequel il est utilisé un transporteur (31) doté d'une partie formant transporteur (31a) qui fait saillie dans le corps, par exemple une partie formant transporteur conique (31a) qui est prévue pour faire saillie dans le corps, lequel est ouvert sur un côté.

31. Dispositif de traitement de parties formant carcasse d'une volaille abattue, dans lequel une partie formant carcasse (2) comprend au moins une partie d'un corps (2a) et au moins une partie d'une aile (2b), comprenant de l'os, une capsule au voisinage de l'articulation du coude et de la chair qui est naturellement présente, lequel dispositif comprend :
- un dispositif de transport comprenant un chemin de transport (37) et au moins un transporteur (31 ; 33) qui est prévu pour transporter une partie formant carcasse,
- chemin de transport le long duquel l'au moins un transporteur peut être déplacé dans une direction de transport (32 ; 34),
- une station de traitement d'aile (1) qui est placée le long du chemin de transport et à laquelle une partie formant carcasse peut être amenée par le dispositif de transport, station de traitement d'aile dans laquelle la partie formant carcasse est traitée pendant que la partie formant carcasse est transportée par le transporteur,
**caractérisé en ce que**
la station de traitement d'aile est prévue de telle manière qu'au moins un os appartenant à l'élément supérieur (2c) ou inférieur (2d) de l'aile (2b) est exposé sur une partie de sa longueur au voisinage du coude (2n), avec pour résultat la préparation d'une tulipe, alors que l'élément supérieur (2c) est encore fixé au corps (2a).

32. Dispositif selon la revendication 31, dans lequel la station de traitement d'aile est également dotée d'un dispositif de déploiement (5) dans lequel l'aile peut être déployée du corps.

33. Dispositif selon la revendication 32, dans lequel le dispositif de déploiement est doté de guides de déploiement d'aile (5a, 5b) le long duquel l'aile du volatile peut être guidée au voisinage du corps.

34. Dispositif selon l'une ou plusieurs des revendications précédentes 31 à 33, dans lequel la station de traitement d'aile est dotée de guides d'ouverture et de pliage (5), à l'aide desquels la peau située entre les éléments supérieur et inférieur peut être mise sous tension, et est également dotée de premiers moyens de découpe (7) pour effectuer une incision dans cette peau.

35. Dispositif selon la revendication 34, dans lequel le premier moyen de découpe est une lame inclinable (7b) qui peut être actionnée, si c'est approprié, par l'aile elle-même.

36. Dispositif selon l'une ou plusieurs des revendications précédentes 31 à 35, dans lequel la station de traitement d'aile comprend un ou plusieurs seconds moyens de découpe (8) qui peuvent effectuer une ou plusieurs incisions dans la capsule au voisinage du coude sans endommager les os humérus, cubitus ou radius, de telle manière que, lorsque les os sont ensuite séparés, la capsule d'au moins un os est détachée de l'os.

37. Dispositif selon la revendication 36, dans lequel les seconds moyens de découpe comprennent une lame allongée (8a).

38. Dispositif selon la revendication 36 ou 37, dans lequel les seconds moyens de découpe comprennent une lame rotative (56a, 56b).

39. Dispositif selon les revendications 36 à 38, dans lequel le second moyen de découpe est doté d'une butée de profondeur, par exemple un disque ou une plaque (7a) (en matière plastique), qui empêche la lame de pouvoir pénétrer trop profondément dans l'articulation.

40. Dispositif selon l'une ou plusieurs des revendications précédentes 31 à 39, dans lequel la station de traitement d'aile (1) est dotée de moyens de forçage (5a, 5b) qui séparent l'os humérus des os radius et cubitus, de telle manière que le coude se brise, alors que les os radius, humérus et cubitus eux-mêmes ne se brisent pas.

41. Dispositif selon la revendication 40, dans lequel les moyens de forçage comprennent des moyens de guidage forcé devant lesquels passe l'élément inférieur de l'aile, lesquels moyens de guidage forcé forment un motif de séparation (9a) qui est tel que l'os humérus peut être séparé des os radius et cubitus.

42. Dispositif selon la revendication 40 ou 41, dans lequel les moyens de forçage comprennent une roue rotative dotée de dents ou de picots (10c), entourés en option d'une bague, entre lesquels l'élément inférieur de l'aile peut être maintenu.

43. Dispositif selon l'une ou plusieurs des revendications 40 à 42, dans lequel les moyens de forçage comprennent des moyens de transport (10), tels qu'une courroie ou une chaîne dotée de picots afin d'aider le dispositif de transport de la volaille abattue à transporter l'aile.

44. Dispositif selon l'une ou plusieurs des revendications 31 à 43, dans lequel les moyens de forçage comprennent des moyens de guidage forcé devant lesquels passe l'élément inférieur de l'aile, lesquels moyens du guidage forment un premier motif de relevage qui est tel que l'extrémité de l'élément inférieur, au voisinage du coude, est pressé en direction du corps, de sorte qu'au moins la chair à cette extrémité de l'os humérus, qui est éloignée du corps, se détache de l'os et est relevée.

45. Dispositif selon l'une plusieurs des revendications 31 ou 44, dans lequel les moyens de forçage comprennent des moyens de guidage forcé (56 ; 57) devant lesquels passe l'élément inférieur de l'aile, lesquels moyens de guidage forment un second motif de relevage qui est tel que l'élément inférieur est déplacé aussi près que possible devant l'élément supérieur dans la direction du corps, de sorte qu'au moins la chair sur l'élément inférieur au voisinage du coude se détache de l'os et est relevée.

46. Dispositif selon l'une ou plusieurs des revendications 31 à 45, dans lequel des moyens de guidage de capsule sont disposés autour de la capsule au voisinage de l'articulation du coude afin de maintenir la capsule en place pendant l'opération de brisure.

47. Dispositif selon l'une ou plusieurs des revendications 31 à 46, comprenant une ou plusieurs plaques de grattage (78a, 78b) devant lesquels un élément de l'aile peut être guidé après la séparation des os, avec pour résultat qu'au moins un os appartenant à un élément de l'aile est exposé sur une partie de sa longueur au voisinage du coude.

48. Dispositif selon l'une ou plusieurs des revendications 31 à 47, également doté d'un dispositif de séparation d'élément (79) dans lequel l'élément inférieur est séparé de l'élément supérieur alors que l'élément supérieur est fixé au corps.

49. Dispositif selon la revendication 48, dans lequel le dispositif de séparation d'élément est doté de troisièmes moyens de découpe qui peuvent effectuer une incision, avec pour résultat que l'élément inférieur doté de la capsule au voisinage du coude fixé à celle-ci peut être séparé de l'élément supérieur.

50. Dispositif selon la revendication 48 ou 49, dans lequel le dispositif de séparation d'élément est doté de quatrièmes moyens de découpe qui peuvent effectuer une incision, avec pour résultat que l'élément inférieur peut être séparé de la capsule au voisinage du coude.

51. Dispositif selon l'une ou plusieurs des revendications précédentes 31 à 48, également doté de cinquièmes moyens de découpe pour retirer l'élément supérieur du corps.
